# EUROPEAN PATENT APPLICATION

(11) **EP 3 725 454 A1**
(43) Date of publication of application: **21.10.2020**
(21) Application number: 18889177.4
(22) Date of filing: 03.12.2018
(51) Int. Cl.: B23K 26/34, B22F 3/105, B22F 3/16, B23K 26/21, B33Y 30/00

(54) **PROCESSING DEVICE, PROCESSING METHOD, MACHINING METHOD, MOLDING DEVICE, MOLDING METHOD, COMPUTER PROGRAM, AND RECORDING MEDIUM**

(30) Priority: 12.12.2017 WO PCT/JP2017/044615
(71) Applicant: NIKON CORPORATION, Minato-ku Tokyo 108-6290 (JP)
(72) Inventor: UENO, Kazuki, Tokyo 108-6290 (JP); SEKIGUCHI, Kei, Tokyo 108-6290 (JP); SHIRAISHI, Masayuki, Tokyo 108-6290 (JP); EGAMI, Shigeki, Tokyo 108-6290 (JP)
(74) Representative: Hoffmann Eitle
(86) International application number: PCT/JP2018/044381
(87) International publication number: WO 2019/116944

(57) **Abstract**

A processing apparatus is a processing apparatus that performs a process for irradiating an object with an energy beam, the processing apparatus is provided with: an energy beam irradiation apparatus that irradiates at least a part of a surface of the object with the energy beam; and a position change apparatus that changes an irradiation position of the energy beam at the surface of the object, the processing apparatus controls the irradiation position of the energy beam by using a shape information relating to a shape of the object.

## Description

### Technical Field

The present invention relates to a processing apparatus, a processing method, a build apparatus, a build method, a computer program and a recording medium for performing a process for irradiating an object with an energy beam, for example.

### Background Art

A Patent Literature 1 discloses a build apparatus that forms a build object by melting a powdery material with an energy beam and then solidifying the melted material again. The build apparatus disclosed in the Patent Literature 1 removes the powdery material that is adhered to the build object after forming the build object. A technical problem of the build apparatus is to perform a proper process to a surface of the build object.

### Citation List

### Patent Literature

Patent Literature 1: US 2017/0014909A1

### Summary of Invention

A first aspect provides a processing apparatus that performs a process for irradiating an object with an energy beam, the processing apparatus is provided with: an energy beam irradiation apparatus that irradiates at least a part of a surface of the object with the energy beam; and a position change apparatus that changes an irradiation position of the energy beam at the surface of the object, the processing apparatus controls the irradiation position of the energy beam by using a shape information relating to a shape of the object.

A second aspect provides a processing apparatus that performs a process for irradiating an object with an energy beam, the processing apparatus is provided with: an energy beam irradiation apparatus that irradiates a first part of a surface of the object and a second part of the surface of the object that faces to a direction different from a direction to which the first part faces with the energy beam; and an attitude change apparatus that changes an attitude of the object relative to an irradiation direction of the energy beam, the processing apparatus sets the attitude of the object to a first attitude so that the first part faces to a first direction and irradiates the first part with the energy beam and then sets the attitude of the object to a second attitude that is different from the first attitude so that the second part faces to a second direction and irradiates the second part with the energy beam.

A third aspect provides a processing apparatus that processes a build object that is built by irradiating a first surface of a member with a build energy beam to form a melt pool at the first surface and supplying build materials to the melt pool, the processing apparatus irradiates at least a part of a second surface of the build object that faces to a second direction that intersects with a first direction along which the member and the build object are arranged with a processing energy beam.

A fourth aspect provides a processing apparatus that is provided with: a light source that supplies an energy beam; a condensing optical system that condenses the energy beam from the light source at a target object; a material supply part that supplies build materials to a condensed position of the energy beam through the condensing optical system; a position change apparatus that changes a relative positional relationship between the condensed position and the target object; and a control apparatus that controls the position change apparatus form an object as a build object by changing the relative positional relationship between the condensed position and the target object and suppling the build materials to the condensed position, the object is irradiated with the energy beam through the condensing optical system, an optical path in the condensing optical system of the energy beam from the light source that is condensed at the target object is a same optical path as an optical path in the condensing optical system of the energy beam with which the object is irradiated.

A fifth aspect provides a processing method of performing a process for irradiating an object with an energy beam, the processing method includes: irradiating at least a part of a surface of the object with the energy beam; and changing an irradiation position of the energy beam on the surface of the object, the processing method changing the irradiation position of the energy beam by using a shape information relating to a shape of the object.

A sixth aspect provides a processing method of performing a process for irradiating an object with an energy beam, the processing method includes: setting an attitude of an object to a first attitude so that a first part of a surface of the object faces to a first direction and irradiating the first part with an energy beam; and setting the attitude of the object to a second attitude that is different from the first attitude so that a second part of the surface of the object that faces to a direction different from a direction to which the first part faces faces to a second direction and irradiating the second part with the energy beam.

A seventh aspect provides a processing method of processing a build object that is built by irradiating a first surface of a member with a build energy beam to form a melt pool at the first surface and supplying build materials to the melt pool, the processing method includes: irradiating at least a part of a second surface of the build object that faces to a second direction that intersects with a first direction along which the member and the build object are arranged with a processing energy beam.

An eighth aspect provides a processing method includes: building a build object by irradiating a first surface of a member with a build energy beam to form a melt pool at the first surface and supplying build materials to the melt pool; and irradiating at least a part of a second surface of the build object that faces to a second direction that intersects with a first direction along which the member and the build object are arranged with a processing energy beam.

A ninth aspect provides a processing method includes: supplying an energy beam; condenseing the energy beam from the light source at a target object by using a condensing optical system; supplying build materials to a condensed position of the energy beam through the condensing optical system; forming an object as a build object by changing the relative positional relationship between the condensed position and the target object and suppling the build materials to the condensed position; and irradiating the object with the energy beam through the condensing optical system, an optical path in the condensing optical system of the energy beam from the light source that is condensed at the target object being a same optical path as an optical path in the condensing optical system of the energy beam with which the object is irradiated.

A tenth aspect provides a computer program that is executed by a computer for controlling a processing apparatus that performs a process for irradiating an object with an energy beam, the processing apparatus is provided with: an energy beam irradiation apparatus that irradiates at least a part of a surface of the object with the energy beam; and a position change apparatus that changes an irradiation position of the energy beam at the surface of the object, the computer program allows the computer to execute a process for controlling the irradiation position of the energy beam by using a shape information relating to a shape of the object.

A eleventh aspect provides a computer program that is executed by a computer for controlling a processing apparatus that performs a process for irradiating an object with an energy beam, the processing apparatus is provided with: n energy beam irradiation apparatus that irradiates a first part of a surface of the object and a second part of the surface of the object that faces to a direction different from a direction to which the first part faces with the energy beam; and an attitude change apparatus that changes an attitude of the object relative to a irradiation direction of the energy beam, the computer program allows the computer to execute a process for setting the attitude of the object to a first attitude so that the first part faces to a first direction and irradiating the first part with the energy beam and then setting the attitude of the object to a second attitude that is different from the first attitude so that the second part faces to a second direction and irradiating the second part with the energy beam.

A twelfth aspect provides a computer program that is executed by a computer for controlling a processing apparatus that processes a build object that is built by irradiating a first surface of a member with a build energy beam to form a melt pool at the first surface and supplying build materials to the melt pool, the computer program allows the computer to execute a process for irradiating at least a part of a second surface of the build object that faces to a second direction that intersects with a first direction along which the member and the build object are arranged with a processing energy beam.

A thirteenth aspect provides a computer program that is executed by a computer for controlling a processing apparatus that is provided with: a light source that supplies an energy beam; a condensing optical system that condenses the energy beam from the light source at a target object; a material supply part that supplies build materials to a condensed position of the energy beam through the condensing optical system; and a position change apparatus that changes a relative positional relationship between the condensed position and the target object, the processing apparatus irradiates the object with the energy beam through the condensing optical system, an optical path in the condensing optical system of the energy beam from the light source that is condensed at the target object is a same optical path as an optical path in the condensing optical system of the energy beam with which the object is irradiated, the computer program allows the computer to execute a process for controlling the position change apparatus form an object as a build object by changing the relative positional relationship between the condensed position and the target object and suppling the build materials to the condensed position.

A fourteenth aspect provides a processing apparatus that performs a process for irradiating an object with an energy beam, the processing apparatus that is provided with: an energy beam irradiation apparatus that irradiates at least a part of a surface of the object with the energy beam; a position change apparatus that changes an irradiation position of the energy beam on the surface of the object; and a receiving apparatus that receives a control signal for controlling the irradiation position of the energy beam by using a shape information relating to a shape of the object.

A fifteenth aspect provides a processing apparatus that performs a process for irradiating an object with an energy beam, the processing apparatus that is provided with: an energy beam irradiation apparatus that irradiates a first part of a surface of the object and a second part of the surface of the object that faces to a direction different from a direction to which the first part faces with the energy beam; an attitude change apparatus that changes an attitude of the object relative to an irradiation direction of the energy beam; and a receiving apparatus that receives a control signal for controlling the energy beam irradiation apparatus and the attitude change apparatus to set the attitude of the object to a first attitude so that the first part faces to a first direction and irradiate the first part with the energy beam and then set the attitude of the object to a second attitude that is different from the first attitude so that the second part faces to a second direction and irradiate the second part with the energy beam.

A sixteenth aspect provides a processing apparatus that processes a build object that is built by irradiating a first surface of a member with a build energy beam to form a melt pool at the first surface and supplying build materials to the melt pool, the processing apparatus is provided with a receiving apparatus that receives a control signal for the processing apparatus to irradiate at least a part of a second surface of the build object that faces to a second direction that intersects with a first direction along which the member and the build object are arranged with a processing energy beam.

A seventeenth aspect provides a processing apparatus that is provided with: a light source that supplies an energy beam; a condensing optical system that condenses the energy beam from the light source at a target object; a material supply part that supplies build materials to a condensed position of the energy beam through the condensing optical system; a position change apparatus that changes a relative positional relationship between the condensed position and the target object; and a receiving apparatus that receives a control signal for controlling the position change apparatus to form an object as a build object by changing the relative positional relationship between the condensed position and the target object and suppling the build materials to the condensed position, the object is irradiated with the energy beam through the condensing optical system, an optical path in the condensing optical system of the energy beam from the light source that is condensed at the target object is a same optical path as an optical path in the condensing optical system of the energy beam with which the object is irradiated.

A eighteenth aspect provides a control apparatus that controls a processing apparatus that performs a process for irradiating an object with an energy beam, the processing apparatus is provided with: an energy beam irradiation apparatus that irradiates at least a part of a surface of the object with the energy beam; and a position change apparatus that changes an irradiation position of the energy beam on the surface of the object, the control apparatus executes a process for controlling the irradiation position of the energy beam by using a shape information relating to a shape of the object.

A nineteenth aspect provides a control apparatus that controls a processing apparatus that performs a process for irradiating an object with an energy beam, the processing apparatus is provided with: an energy beam irradiation apparatus that irradiates a first part of a surface of the object and a second part of the surface of the object that faces to a direction different from a direction to which the first part faces with the energy beam; and an attitude change apparatus that changes an attitude of the object relative to an irradiation direction of the energy beam, the control apparatus executes a process for setting the attitude of the object to a first attitude so that the first part faces to a first direction and irradiating the first part with the energy beam and then setting the attitude of the object to a second attitude that is different from the first attitude so that the second part faces to a second direction and irradiating the second part with the energy beam.

A twentieth aspect provides a control apparatus that controls a processing apparatus that processes a build object that is built by irradiating a first surface of a member with a build energy beam to form a melt pool at the first surface and supplying build materials to the melt pool, the control apparatus executes a process for irradiating at least a part of a second surface of the build object that faces to a second direction that intersects with a first direction along which the member and the build object are arranged with a processing energy beam.

A twenty-first aspect provides a control apparatus that controls a processing apparatus, the processing apparatus is provided with: a light source that supplies an energy beam; a condensing optical system that condenses the energy beam from the light source at a target object; a material supply part that supplies build materials to a condensed position of the energy beam through the condensing optical system; and a position change apparatus that changes a relative positional relationship between the condensed position and the target object, the processing apparatus irradiates the object with the energy beam through the condensing optical system, an optical path in the condensing optical system of the energy beam from the light source that is condensed at the target object is a same optical path as an optical path in the condensing optical system of the energy beam with which the object is irradiated, the control apparatus executes a process for controlling the position change apparatus to form an object as a build object by changing the relative positional relationship between the condensed position and the target object and suppling the build materials to the condensed position.

An operation and another advantage of the above described aspect will be apparent from an embodiment described below.

### Brief Description of Drawings

[FIG. 1] FIG. 1 is a block diagram that illustrates a structure of a build system in the present embodiment.
[FIG. 2] Each of FIG. 2A and FIG. 2B is a side view that illustrates a structure of a build apparatus of the build system in the present embodiment (note that a part thereof is a cross-sectional view for the purpose of clear illustration).
[FIG. 3] Each of FIG. 3A to FIG. 3C is a cross-sectional view that illustrates an aspect in which a certain area on a workpiece is irradiated with a light and build materials are supplied thereto.
[FIG. 4] Each of FIG. 4A to FIG. 4C is a cross-sectional view that illustrates a process for forming a three-dimensional structural object.
[FIG. 5] FIG. 5A is a cross-sectional view that illustrates a polishing target surface that is at least a part of a surface of the three-dimensional structural object and FIG. 5B is a perspective view that illustrates a polishing target surface that is at least a part of a surface of the three-dimensional structural object.
[FIG. 6] Each of FIG. 6A to FIG. 6C is a cross-sectional view that illustrates a state of the polishing target surface in the process for performing a polishing operation.
[FIG. 7] FIG. 7 is a graph that illustrates a light intensity condition.
[FIG. 8] FIG. 8 is a cross-sectional view that illustrates a light that satisfies an irradiation size condition with the polishing target surface.
[FIG. 9] Each of FIG. 9A and FIG. 9B is a cross-sectional view that illustrates a state of the polishing target surface in the process for performing the polishing operation so that the irradiation size condition is not satisfied.
[FIG. 10] FIG. 10 is a cross-sectional view that illustrates the light that satisfies the irradiation size condition with the polishing target surface.
[FIG. 11] FIG. 11 is a cross-sectional view that illustrates the three-dimensional structural object in which a plurality of structural layers having different heights are layered.
[FIG. 12] Each of FIG. 12A and FIG. 12B is a cross-sectional view that illustrates a light that satisfies a light direction condition with the polishing target surface.
[FIG. 13] FIG. 13 is a cross-sectional view that illustrates the light that satisfies the light direction condition with the polishing target surface.
[FIG. 14] FIG. 14 is a cross-sectional view that illustrates the light that satisfies the light direction condition with the polishing target surface.
[FIG. 15] Each of FIG. 15A to FIG. 15C is a cross-sectional view that illustrates the polishing target surface that satisfies a surface direction condition.
[FIG. 16] FIG. 16A is a cross-sectional view that illustrates build materials melted by the light with which the polishing target surface that does not satisfy the surface direction condition is irradiated and FIG. 16B is a cross-sectional view that illustrates the build materials melted by the light with which the polishing target surface that satisfies the surface direction condition is irradiated.
[FIG. 17] FIG. 17 is a block diagram that illustrates a structure of a build apparatus in a first modified example.
[FIG. 18] FIG. 18 is a block diagram that illustrates a structure of a build apparatus in a second modified example.
[FIG. 19] FIG. 19 is a perspective view that illustrates an area at which heat is not diffused relatively easily and an area at which heat is diffused relatively easily in the three-dimensional structural object.
[FIG. 20] FIG. 20 is a graph that illustrates a heat amount that is controlled on the basis of a diffusion degree of the heat (a thermal diffusion degree) to suppress a deformation of the three-dimensional structural object.
[FIG. 21] FIG. 21 is a graph that illustrates a relationship between the intensity of the light and the heat amount transferred from the light.
[FIG. 22] FIG. 22 is a graph that illustrates a relationship between a moving speed of an irradiation area and the heat amount transferred from the light.

### Description of Embodiments

Next, with reference to drawings, embodiments of a processing apparatus, a processing method, a processing method, a build apparatus, a build method, a computer program and a recording medium will be described. In the below described description, the embodiments of a processing apparatus, a processing method, a processing method, a build apparatus, a build method, a computer program and a recording medium will be described by using a build system 1 that is configured to form a three-dimensional structural object ST by performing an additive processing using build materials M by a LMD (Laser Metal Deposition). Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the build system 1 will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction), for the purpose of simple description. Moreover, rotational directions (in other words, inclination directions) around the X axis, the Y axis and the Z axis are referred to as a θX direction, a θY direction and a θZ direction, respectively. Here, the Z axis direction may be a gravity direction. An XY plane may be a horizontal direction.

### (1) Structure of Build System 1

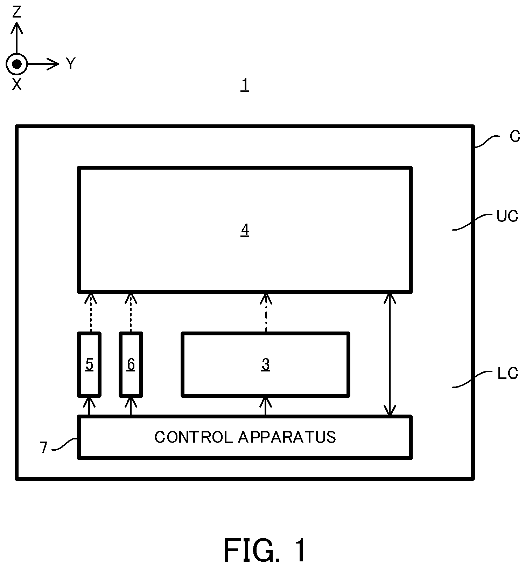

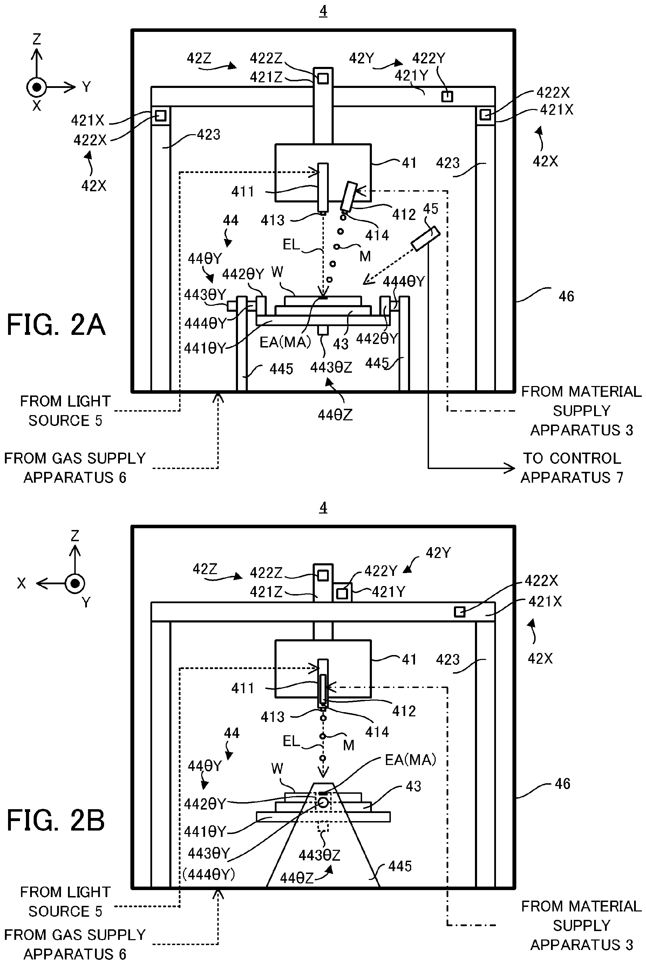

Firstly, with reference to FIG. 1 and FIG. 2A to FIG. 2B, an entire structure of the build system 1 in the present embodiment will be described. FIG. 1 is a cross-sectional view that illustrates one example of the structure of the build system 1 in the present embodiment. Each of FIG. 2A and FIG. 2B is a side view that illustrates the structure of a build apparatus 4 of the build system 1 in the present embodiment (note that a part thereof is a cross-sectional view for the purpose of clear illustration).

The build system 1 is configured to form the three-dimensional structural object ST (namely, a three-dimensional object having a size in each of three-dimensional directions, and a solid object). The build system 1 is configured to form the three-dimensional structural object ST on a workpiece W that is a base (namely, a base member) for forming the three-dimensional structural object ST. The build system 1 is configured to form the three-dimensional structural object ST by performing the additive processing on the workpiece W. When the workpiece W is a below described stage 43, the build system 1 is configured to form the three-dimensional structural object ST on the stage 43. When the workpiece W is an existing structural object held by the stage 43, the build system 1 is configured to form the three-dimensional structural object ST on the existing structural object. In this case, the build system 1 may form the three-dimensional structural object ST that is integrated with the existing structural object. An operation for forming the three-dimensional structural object ST that is integrated with the existing structural object is equivalent to an operation for adding a new structural object to the existing structural object. Alternatively, the build system 1 may form the three-dimensional structural object ST that is separable from the existing structural object. Note that FIG. 2 illustrates an example in which the workpiece W is an existing structural object held by the stage 43. The below described description also uses the example in which the workpiece W is an existing structural object held by the stage 43.

As described above, the build system 1 is configured to form the three-dimensional structural object ST by the Laser Metal Deposition. Namely, it can be said that the build system 1 is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the build system 1 is provided with a material supply apparatus 3, a build apparatus 4, a light source 5, a gas supply apparatus 6 and a control apparatus 7, as illustrated in FIG. 1. The material supply apparatus 3, the build apparatus 4, the light source 5, the gas supply apparatus 6 and the control apparatus 7 are housed in a housing C. In an example illustrated in FIG. 1, the build apparatus 4 is housed in an upper space UC of the housing C and the material supply apparatus 3, the light source 5, the gas supply apparatus 6 and the control apparatus 7 are housed in a lower space LC of the housing C that is located below the upper space UC. However, an arranged position in the housing C of each of the material supply apparatus 3, the build apparatus 4, the light source 5, the gas supply apparatus 6 and the control apparatus 7 is not limited to an arranged position illustrated in FIG. 1.

The material supply apparatus 3 supplies build materials M to the build apparatus 4. The material supply apparatus 3 supplies, to the build apparatus 4, the build materials M the amount of which is necessary for the build apparatus 4 to form the three-dimensional structural object ST per unit time by supplying the build materials M at a desired supply rate that is based on the necessary amount.

The build material M is a material that is molten by an irradiation of a light EL having a predetermine intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery or granular materials. However, the build materials M may not be the powdery or granular materials, and a wire-like build materials or a gas-like material may be used, for example.

The build apparatus 4 forms the three-dimensional structural object ST by processing the build materials M supplied from the material supply apparatus 3. Furthermore, the build apparatus 4 processes at least a part of a surface of the formed three-dimensional structural object ST. Therefore, the build apparatus 4 also serves as a processing apparatus that processes at least a part of a surface of the formed three-dimensional structural object ST (namely, a processing apparatus that performs a process). In order to form and process the three-dimensional structural object ST, as illustrated in FIG. 2A and FIG. 2B, the build apparatus 4 is provided with a build head 41, a head driving system 42 (42X, 42Y and 42Z), the stage 43, a stage driving system 44 and a measurement apparatus 45. Moreover, the build head 41 is provided with an irradiation system 411 and a material nozzle 412 (namely, a supply system that supplies the build materials M). The build head 41, the driving system 42, the stage 43, the stage driving system 44 and the measurement apparatus 45 are housed in a chamber 46.

The irradiation system 411 is an optical system (for example, a condensing optical system) for emitting the light EL from an emitting part 413. Specifically, the irradiation system 411 is optically connected to the light source 5 that generates the light EL through a non-illustrated light transmitting member such as an optical fiber and light pipe. The irradiation system 411 emits the light EL transmitted from the light source 5 through the light transmitting member. The irradiation system 411 emits the light EL in a downward direction (namely, toward a -Z side) from the irradiation system 411. The stage 43 is disposed below the irradiation system 411. When the workpiece W is loaded on the stage 43, the irradiation system 411 is configured to emit the light EL toward the workpiece W. Specifically, the irradiation system 411 irradiates a circular (alternatively, any other shaped) irradiation area EA that is set on the workpiece W as an area that is irradiated with the light EL (typically, in which the light is condensed). Moreover, a state of the irradiation system 411 is switchable between a state where the irradiation area EA is irradiated with the light EL and a state where the irradiation area EA is not irradiated with the light EL under the control of the control apparatus 7. Note that a direction of the light EL emitted from the irradiation system 411 is not limited to a vertical downward direction (namely, coincident with the -Z axis direction), and may be a direction that is inclined with respect to the Z axis by a predetermined angle, for example.

The material nozzle 412 has a supply outlet 414 that supplies the build materials M. The material nozzle 412 supplies (specifically, injects, blows out or sprays) the build materials M from the supply outlet 414. The material nozzle 412 is physically connected to the material supply apparatus 3 that is a supply source of the build materials M through a non-illustrated powdery material transporting member such as a pipe. The material nozzle 412 supplies the build materials M supplied from the material supply apparatus 3 through the powdery material transporting member. Note that the material nozzle 412 is illustrated to have a tube-like shape in FIG. 2A and FIG. 2B, however, the shape of the material nozzle 412 is not limited to this shape. The material nozzle 412 supplies the build materials M in a downward direction (namely, toward the -Z side) from the material nozzle 412. The stage 43 is disposed below the material nozzle 412. When the workpiece W is loaded on the stage 43, the material nozzle 412 supplies the build materials M toward the workpiece W. Note that although a moving direction of the build materials M supplied from the material nozzle 41 is a direction that is inclined with respect to the Z axis by a predetermined angle (as one example, an acute angle), it may be the -Z axis direction (namely, a vertical downward direction).

In the present embodiment, the material nozzle 412 is aligned to the irradiation system 411 so as to supply the build materials M to the irradiation area EA that is irradiated with the light EL by the irradiation system 411. Namely, the material nozzle 412 is aligned to the irradiation system 411 so that the irradiation area EA is coincident with (alternatively, at least partially overlaps with) a supply area MA that is set on the workpiece W as an area to which the material nozzle 412 supplies the build materials M. Note that the material nozzle 412 may aligned so as to supply the build materials M to a melt pool MP that is formed at the workpiece W by the light EL emitted from the irradiation system 411.

The head driving system 42 moves the build head 41. In order to move the build head 41, the head driving system 42 is provided with a head driving system 42X, a head driving system 42Y and a head driving system 42Z. The head driving system 42X moves the build head 41 along the X axis. The head driving system 42Y moves the build head 41 along the Y axis. The head driving system 42Z moves the build head 41 along the Z axis. Namely, the head driving system 42 moves the build head 41 along each of the X axis, the Y axis and the Z axis. When the build head 41 moves along each of the X axis and the Y axis, the irradiation area EA (furthermore, the supply area MA) moves on the workpiece W along each of the X axis and the Y axis. Note that the head driving system 42 may be configured to rotate the build head 41 along a rotational axis around the X axis and a rotational axis around the Y axis.

Each of the head driving system 42X, the head driving system 42Y and the head driving system 42Z is a driving system including a voice coil motor, for example, however, may be a driving system including another motor (alternatively, a driving source). The head driving system 42X is provided with: a X guide part 421X that extends along the X axis and that is fixed to a support frame 423 disposed at a bottom surface of the chamber 46 through a vibration isolator such as an air spring; and a voice coil motor 422X that includes a stator (for example, either one of a magnet and a coil) fixed to the X guide part 421X and a movable element (for example, the other one of the magnet and the coil) fixed to a below described Y guide part 421Y. The head driving system 42Y is provided with: the Y guide part 421Y that extends along the Y axis and to which the movable element of the voice coil motor 422X is fixed; and a voice coil motor 422Y that includes a stator (for example, either one of a magnet and a coil) fixed to the Y guide part 422X and a movable element (for example, the other one of the magnet and the coil) fixed to a below described Z guide part 421Z. The head driving system 42Z is provided with: the Z guide part 421Z that extends along the Z axis and to which the movable element of the voice coil motor 422Y is fixed; and a voice coil motor 422Z that includes a stator (for example, either one of a magnet and a coil) fixed to the Z guide part 422Z and a movable element (for example, the other one of the magnet and the coil) fixed to the build head 41. When the voice coil motor 422X is driven, the Y guide part 421Y (furthermore, the build head 41 that is connected to the Y guide part 421Y through the Z guide part 421Z) moves along the X guide part 421X (namely, along the X axis). When the voice coil motor 422Y is driven, the Z guide part 421Z (furthermore, the build head 41 that is connected to the Z guide part 421Z) moves along the Y guide part 421Z (namely, along the Y axis). When the voice coil motor 422Z is driven, the build head 41 moves along the Z guide part 421Z (namely, along the Z axis). Note that the support frame 423 is disposed in the chamber through the vibration isolator that reduces a vibration from a floor on which the build system 1 is disposed or a vibration from an outside of the chamber 46 in the build system 1, however, it may be disposed between the build system 1 and the floor when the vibration from the outside of the chamber 46 in the build system 1 is ignorable, for example, and the vibration isolator may not be used when a vibration condition from the floor is good (low vibration).

The stage 43 is configured to hold the workpiece W. Moreover, the stage 43 is configured to release the held workpiece W. The above described irradiation system 411 emits the light EL in at least a part of a period when the stage 43 holds the workpiece W. Moreover, the above described material nozzle 412 supplies the build materials M in at least a part of the period when the stage 43 holds the workpiece W. Note that there is a possibility that a part of the build materials M supplied by the material nozzle 412 is scattered or drops outside the workpiece W (for example, around the stage 43) from a surface of the workpiece W. Thus, the build system 1 may be provided with a collecting apparatus that collects the build material M scattered or dropping around the stage 43. Note that the stage 43 may be provided with a mechanical chuck, a vacuum chuck and the like in order to hold the workpiece W.

The stage driving system 44 moves the stage 43 (changes an attitude of the stage 43). In order to move the stage 43, the stage driving system 44 is provided with a stage driving system 44θY and a stage driving system 44θZ. The stage driving system 44θY moves the stage 43 along the θY axis. In other words, the stage driving system 44θY rotates the stage 43 around the Y axis. The stage driving system 44θZ moves the stage 43 along the θZ axis. In other words, the stage driving system 44θZ rotates the stage 43 around the Z axis. Namely, the stage driving system 44 moves the stage 43 along each of the θY axis and the θZ axis. Note that the θY axis is set to penetrate the workpiece W (to be coincident with an upper surface of the stage 43) in an example illustrated in FIG. 2A and FIG. 2B, however, the θY axis is not limited to this and may be set to be above or below the workpiece W (above (at the + Z side from) the upper surface of the stage 43 or below (at the - Z side from) the upper surface of the stage 43).

Each of the stage driving system 44θY and the stage driving system 43θZ is a driving system including a rotational motor, for example, however, may be a driving system including another motor (alternatively, a driving source). The stage driving system 44θY is provided with: a plate-like holding member 441θY that holds the stage 43; a plate-like wall member 442θY that penetrates from an end part at the + Y side and an end part at the - Y side of the holding member 441θY toward the + Z side; a rotational motor 443θY having a rotor that is configured to rotate around the Y axis; and a connecting member 444θY that connects the rotor of the rotational motor 443θY and the wall member 442θY. The rotational motor 443θY is fixed to a support frame 445 disposed at the bottom surface of the chamber 46 through a vibration isolator such as an air spring. The stage driving system 44θZ is provided with a rotational motor 443θZ that is configured to rotate around the Z axis and that has a rotor connected to the stage 43. The rotational motor 443θZ is fixed to the holding member 441θY. When the rotational motor 443θY is driven, the holding member 441θY (furthermore, the stage 43 held by the holding member 441θY) rotates around the Y axis. When the rotational motor 44θZ is driven, the holding member 441θY (furthermore, the stage 43 held by the holding member 441θY) rotates around the Y axis. When the rotational motor 443θZ is driven, the stage 43 rotates around the Z axis. When the rotational motor 44θZ is driven, the holding member 441θY (furthermore, the stage 43 held by the holding member 441θY) rotates around the Y axis. Note that the support frame 445 is disposed in the chamber through the vibration isolator that reduces a vibration from the floor on which the build system 1 is disposed or a vibration from an outside of the chamber 46 in the build system 1, however, it may be disposed between the build system 1 and the floor when the vibration from the outside of the chamber 46 in the build system 1 is ignorable, for example, and the vibration isolator may not be used when a vibration condition from the floor is good (low vibration).

When the stage 43 moves along each of the θY axis and the θZ axis (rotates around each of the θY axis and the θZ axis), a relative position of the stage 43 (furthermore, at least one of the workpiece W held by the stage 43 and the three-dimensional structural object ST) relative to the irradiation system 411 changes. More specifically, when the stage 43 moves along each of the θY axis and the θZ axis, the attitude of the stage 43 (furthermore, at least one of the workpiece W held by the stage 43 and the three-dimensional structural object ST) relative to the irradiation system 411 changes. The attitude of the stage 43 (furthermore, at least one of the workpiece W held by the stage 43 and the three-dimensional structural object ST) relative to an emitting direction of the light EL from the irradiation system 411 changes. The attitude of the stage 43 (furthermore, at least one of the workpiece W held by the stage 43 and the three-dimensional structural object ST) relative to an axis line of the light EL propagating from the irradiation system 411 to the irradiation area EA changes.

The measurement apparatus 45 measures a shape of the three-dimensional structural object ST formed by the build apparatus 4. The measurement apparatus 45 measures a shape of a surface of the three-dimensional structural object ST, for example. The measurement apparatus 45 may measure the shape of the three-dimensional structural object ST by using a Pattern Projection method or a Light Section method in which a light pattern is projected on the surface of the three-dimensional structural object ST and a shape of the projected pattern is measured, a Time Of Flight method in which an operation of emitting the light toward the surface of the three-dimensional structural object ST and measuring a distance from the three-dimensional structural object ST on the basis of a time necessary for the emitted light to return is performed at a plurality of positions on the three-dimensional structural object ST, a Moire Topography method (specifically, a grid illumination method or a grid projection method), a Holographic Interference method, an Auto Collimation method, a Stereo method, an Astigmatism method, a Critical Angle method, or a Knife Edge method, for example.

Note that the measurement apparatus 45 may measure a shape of the workpiece W (for example, a shape of its surface).

Again in FIG. 1, the light source 5 emits, as the light EL, at least one of an infrared light, a visible light and an ultraviolet light, for example. However, another type of light may be used as the light EL. The light EL is a laser light. In this case, the light source 5 may include a semiconductor laser such as a laser light source (for example, a Laser Diode (LD)). The laser light source may be a fiber laser, a CO₂ laser, a YAG laser, an Excimer laser or the like. However, the light EL may not be the laser light and the light source 5 may include any light source (for example, at least one of a LED (Light Emitting Diode), a discharge lamp and the like).

The gas supply apparatus 6 is a supply source of inert gas. Nitrogen gas or Argon gas is one example of the inert gas. The gas supply apparatus 6 supplies the inert gas into the chamber 46 of the build apparatus 4. As a result, an inner space of the chamber 46 is a space that is purged by the inert gas. Note that the gas supply apparatus 6 may be a tank that stores the inert gas such as the Nitrogen gas or the Argon gas, and may be a Nitrogen gas generation apparatus that generates the Nitrogen gas by using air as material when the inert gas is the Nitrogen gas.

The control apparatus 7 controls an operation of the build system 1. The control apparatus 7 may include a CPU (Central Processing Unit), a GPU (Graphic Processing Unit) and a memory, for example. The control apparatus 7 serves as an apparatus for controlling the operation of the build system 1 by means of the CPU executing a computer program. The computer program is a computer program that allows the control apparatus 7 (for example, the CPU) to execute (namely, to perform) a below described operation that should be executed by the control apparatus 7. Namely, the computer program is a computer program that allows the control apparatus 7 to function so as to make the build system 1 execute the below described operation. The computer program executed by the CPU may be recorded in the memory (namely, a recording medium) of the control apparatus 7, or may be recorded in any recording medium (for example, a hard disk or a semiconductor memory) that is built in the control apparatus 7 or that is attachable to the control apparatus 7. Alternatively, the CPU may download the computer program that should be executed from an apparatus disposed outside the control apparatus 7 through a network interface. Moreover, the control apparatus 7 may not be disposed in the build system 1, and may be disposed outside the build system 1 as a server and the like. In this case, the control apparatus 7 may be connected to the build system 1 through a wired or a wireless communication line or a network. When they are physically connected through a wired line, a serial connection such as IEEE1394, RS-232x, RS-422, RS-423, RS-485 and USB, a parallel connection or an electric connection through a network such as 10-BASE-T, 100BASE-TX or 1000BASE-T may be used. When they are connected through a wireless line, a wireless LAN such as IEEE802.1x or OFDM, an electrical wave such as Bluetooth (registered trademark), an infrared ray, an optical communication or the like may be used. In this case, the control apparatus 7 and the build system 1 may be configured to transmit and receive various information through the communication line or the network. Moreover, the control apparatus 7 may be configured to transmit an information such as a command and a control parameter to the build system 1 through the above described communication line or the network. The build system 1 may be provided with a receiving apparatus that receives the information such as the command and the control parameter from the control apparatus 7 through the above described communication line or the network. Note that the recording medium recording therein the computer program that should be executed by the CPU may include a magnetic medium such as a magnetic disc or a magnetic tape, an optical disc, an optical-magnetic disc including a CD-ROM, a CD-R, a CD-RW, a flexible disc, a MO, a DVD-ROM, a DVD-RAM, a DVD-R, a DVD+R, a DVD-RW, a DVD+RW or a Blu-ray (registered trademark), a semiconductor memory such as a USB memory, and another medium that is configured to store the program. Moreover, the program includes not only the program that is stored in the above described recording medium and distributed but also a program that is distributed by a download through a network line such as an Internet and the like. Moreover, the recording medium includes a device that is configured to record the program and a device for universal use or exclusive use in which the above described program is embedded to be executable in a form of a software, a firmware or the like, for example. Moreover, various processes or functions included in the program may be executed by a program software that is executable by the computer or the process of each part may be realized by a hardware such as a predetermined gate array (a FPGA, an ASIC) or in a form in which a program software module and a partial hardware module that realizes an partial element of the hardware are combined. Especially in the present embodiment, the control apparatus 7 controls an emitting aspect of the light EL by the irradiation system 411. The emitting aspect includes at least one of an intensity of the light EL and an emitting timing of the light EL. When the light EL is a pulse light, the emitting aspect may include at least one of a length of an ON time of the pulse light and a ratio (a duty ratio) of the ON time to an OFF time of the light EL. Moreover, the control apparatus 7 controls a moving aspect of the build head 41 by the head driving system 42 and a moving aspect of the stage 43 by the stage driving system 44. The moving aspect includes at least one of a moving distance, a moving speed, a moving direction and a moving timing. Moreover, the control apparatus 7 controls a supplying aspect of the build materials M by the material supply apparatus 3. The supplying aspect includes a supplied amount (especially, a supplied amount per unit time). Note that the control apparatus 7 may not be disposed in the build system 1, and may be disposed outside the build system 1 as the server and the like.

### (2) Operation of Build System 1

Next, the operation of the build system 1 will be described. In the present invention, the build system 1 performs a build operation for forming the three-dimensional structural object ST, as described above. Furthermore, the build system 1 performs a processing operation for processing at least a part of the surface of the three-dimensional structural object ST. Thus, in the below described description, the build operation and the processing operation will be described in order.

### (2-1) Build Operation

Firstly, the build operation will be described. As described above, the build system 1 forms the three-dimensional structural object ST by the Laser Metal Deposition. Thus, the build system 1 may form the three-dimensional structural object ST by performing an existing build operation based on the Laser Metal Deposition. One example of the build operation of the three-dimensional structural object ST by the Laser Metal Deposition will be briefly described in the below described description.

The build system 1 forms the three-dimensional structural object ST on the workpiece W on the basis of a three-dimensional model data or the like (for example, a CAD (Computer Aided Design) data) of the three-dimensional structural object ST that should be formed. The three-dimensional model data includes a data that represents a shape (especially, a three-dimensional shape) of the three-dimensional structural object ST. A measured data of the solid object measured by a measurement apparatus disposed in the build system 1 or a measured data by a three-dimensional shape measurement device disposed separately from the build system 1 such as a contact-type of three-dimensional coordinate measurement device having a probe that is movable relative to the workpiece W and is allowed to contact the workpiece W and a non-contact-type of three-dimensional measurement device (as one example, a Pattern Projection type of three-dimensional measurement device, a Light Section type of three-dimensional measurement device, a Time Of Flight type of three-dimensional measurement device, a Moire Topography type of three-dimensional measurement device, a Holographic Interference type of three-dimensional measurement device, a CT (Computed Tomography) type of three-dimensional measurement device, a MRI (Magnetic Resonance Imaging) type of three-dimensional measurement device and the like) may be used as the three-dimensional model data, for example. Alternatively, a design data of the three-dimensional structural object ST may be used as the three-dimensional model data. Note that a STL (Stereo Lithography) format, a VRML (Virtual Reality Modeling language) format, an AMF (Additive manufacturing File format), an IGES (Initial Graphics Exchange Specification) format, a VDA-FS (Association of German Automotive manufactures-Surfaces Interface) format, a HP/GL (Hewlett-Packard Graphics Language) format, a Bitmap format and the like may be used as the three-dimensional model data, for example. The build system 1 sequentially forms a plurality of layered partial structural objects (it is referred to as a "structural layer" in the below described description) SL that are arranged along the Z axis direction in order to form the three-dimensional structural object ST, for example. For example, the build system 1 forms, one by one, the plurality of structural layers SL that are obtained by slicing the three-dimensional structural object ST along the Z axis direction. As a result, the three-dimensional structural object ST that is a layered structural body in which the plurality of structural layers SL are laminated is formed. Next, a flow of an operation for forming the three-dimensional structural object ST by forming the plurality of structural layers SL one by one in order will be described.

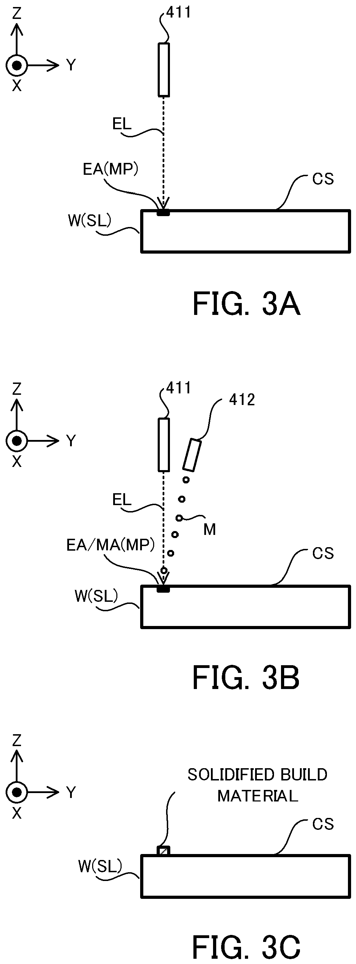

Firstly, an operation for forming each structural layer SL will be described. The build system 1 sets the irradiation area EA at a desired area on a build surface CS that corresponds to a surface of the workpiece W or a surface of the formed structural layer SL and emits the light EL from the irradiation system 411 to the irradiation area EA under the control of the control apparatus 7. Note that an area on the build surface CS that is occupied by the light EL emitted from the irradiation system 411 may be referred to as the irradiation area EA. In the present embodiment, a light concentration position (namely, a condensed position) of the light EL is coincident with the build surface CS. As a result, as illustrated in FIG. 3A, the melt pool (namely, a pool of a metal molten by the light EL) MP is formed at the desired area on the build surface CS by the light EL emitted from the irradiation system 411. Moreover, the build system 1 sets the supply area MA at the desired area on the build surface CS and supplies the build materials M to the supply area MA from the material nozzle 412 under the control of the control apparatus 7. Here, since the irradiation area EA is coincident with the supply area MA as described above, the supply area MA is set at an area at which the melt pool MP is formed. Thus, the build system 1 supplies the build materials M to the melt pool MP from the material nozzle 412, as illustrated in FIG. 3B. As a result, the build materials M supplied to the melt pool MP are molten. When the melt pool MP is not irradiated with the light EL due to the movement of the build head 41, the build materials M molten in the melt pool MP are cooled and solidified (namely, coagulated) again. As a result, as illustrated in FIG. 3C, the build materials M solidified again are deposited on the build surface CS. Namely, a build object is formed by a deposition of the build materials M solidified again.

A series of build process including the formation of the melt pool MP by the irradiation of the light EL, the supply of the build materials M to the melt pool MP, the melting of the supplied build materials M and the re-solidification of the molten build materials M is repeated while relatively moving the build head 41 relative to the build surface CS along the XY plane. When the build head 41 relatively moves relative to the build surface CS, the irradiation area EA also relatively moves relative to the build surface CS. Therefore, the series of build process is repeated while relatively moving the irradiation area EA relative to the build surface CS along the XY plane. In this case, the irradiation area EA that is set at the area on which the build object should be formed is selectively irradiated with the light EL and the irradiation area EA that is set at an area on which the build object should not be formed is not selectively irradiated with the light EL (it can be said that the irradiation area EA is not set at the area on which the build object should not be formed). Namely, the build system 1 moves the irradiation area EA along a predetermined moving trajectory on the build surface CS and irradiates the build surface CS with the light EL at a timing based on a distribution pattern of an area on which the build object should be formed (namely, a pattern of the structural layer SL). As a result, the structural layer SL that is an aggregation of the build object of the solidified build materials M is formed on the build surface CS. Note that the irradiation area EA moves relative to the build surface CS in the above described description, however, the build surface CS may move relative to the irradiation area EA.

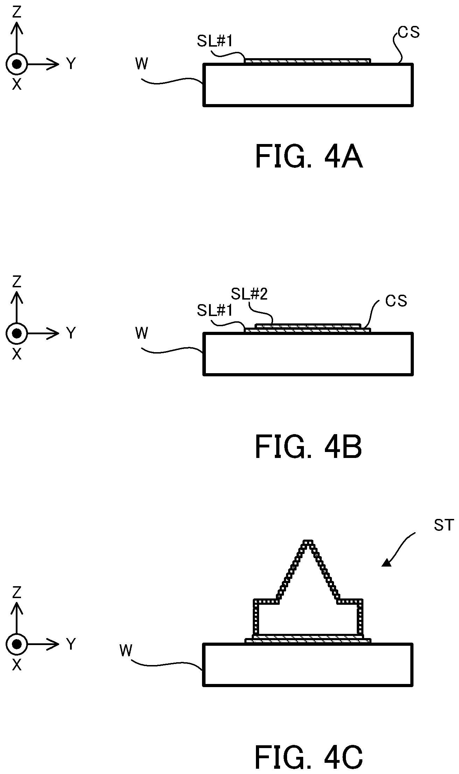

The build system 1 repeats the operation for forming the structural layer SL on the basis of the three-dimensional model data under the control of the control apparatus 7. Specifically, a slice data is firstly generated by performing a slicing process on the three-dimensional model data by a layer pitch. Note that a data obtained by partially modifying the slice data on the basis of a characteristic of the build system 1 may be used. The build system 1 performs operation for forming the first structural layer SL#1 on the build surface CS that corresponds to the surface of the workpiece W on the basis of the three-dimensional model data corresponding to a structural layer SL#1, namely, the slice data corresponding to the structural layer SL#1. As a result, as illustrated in FIG. 4A, the structural layer SL#1 is formed on the build surface CS. Then, the build system 1 sets the surface (namely, an upper surface) of the structural layer SL#1 to new build surface CS and forms a second structural layer SL#2 on the new build surface CS. In order to form the structural layer SL#2, firstly, the control apparatus 7 controls the driving system 42 so that the build head 41 moves along the Z axis direction. Specifically, the control apparatus 7 controls the driving system 42 to move the build head 41 toward the +Z axis side so that the irradiation area EA and the supply area MA are set on the surface of the structural layer SL#1 (namely, the new build surface CS). By this, the light concentration position of the light EL is coincident with the new build surface CS. Then, the build system 1 forms the structural layer SL#2 on the structural layer SL#1 on the basis of the slice data corresponding to the structural layer SL#2 by the operation that is same as the operation for forming the structural layer SL#1 under the control of the control apparatus 7. As a result, as illustrated in FIG. 4B, the structural layer SL#2 is formed. Then, same operation is repeated until all structural layers SL constituting the three-dimensional structural object that should be formed on the workpiece W are formed. As a result, the three-dimensional structural object is formed by a layered structural object in which the plurality of structural layers SL are laminated along the Z axis (namely, along a direction from a bottom surface to an upper surface of the melt pool MP), as illustrated in FIG. 4C.

Note that the shape (for example, the shape of the surface) of the three-dimensional structural object in which some number of structural layer SL is already formed but all of the structural layers SL are not yet formed may be measured by using the measurement apparatus 45. In this case, at least a part of the slice data that is used for building the structural layer SL after the measurement may be modified on the basis of a measured result of the measurement apparatus 45.

### (2-2) Processing Operation (Polishing Operation)

Next, the processing operation will be described. The build system 1 performs the processing operation for processing at least a part of the surface of the three-dimensional structural object ST by irradiating at least a part of the surface of the three-dimensional structural object ST formed by the build operation with the light EL. The below described description uses, as one example of the processing operation, a polishing operation for polishing at least a part of the surface of the three-dimensional structural object ST. In the below described description, the surface that is polished by the polishing operation is referred to as a "polishing target surface PS".

In the present embodiment, the "polishing operation for polishing the polishing target surface PS" includes an "operation for smoothing the polishing target surface PS, increasing a flatness of (namely, flatting) the polishing target surface PS and / or decreasing (namely, reducing) a roughness of the polishing target surface PS, compared to that before the polishing operation is performed". Incidentally, when the polishing target surface PS is polished, there is a possibility that a color of the polishing target surface PS changes, compared to that before the polishing operation is performed. Therefore, the "polishing operation for polishing the polishing target surface PS" may include an "operation for changing the color of the polishing target surface PS, compared to that before the polishing operation is performed". When the polishing target surface PS is polished, there is a possibility that at least one of a reflectance (namely, a reflectance relative to any light) and a diffusivity (namely, a diffusivity relative to any light) of the polishing target surface PS changes, compared to that before the polishing operation is performed. Therefore, the "polishing operation for polishing the polishing target surface PS" may include an "operation for changing at least one of the reflectance and the diffusivity of the polishing target surface PS, compared to that before the polishing operation is performed".

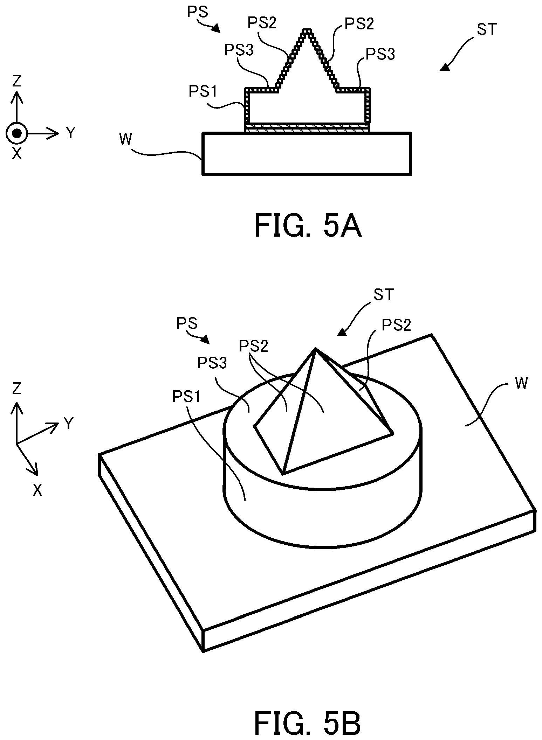

Next, with reference to FIG. 5A and FIG. 5B, the polishing target surface PS on which the polishing operation is performed will be described. FIG. 5A is a cross-sectional view that illustrates a cross-sectional surface of the three-dimensional structural object ST and FIG. 5B is a perspective view that illustrates an appearance of the three-dimensional structural object ST.

As illustrated in FIG. 5A and FIG. 5B, there is a possibility that the surface of the three-dimensional structural object ST includes a surface along (typically, a surface parallel to) a layered direction (namely, the Z axis direction) of the plurality of structural layers SL constituting the three-dimensional structural object ST. In this case, the polishing target surface PS may include a surface that expands in the layered direction of the structural layers SL. Namely, the polishing target surface PS may include a polishing target surface PS1 along the layered direction of the structural layers SL. In other words, the polishing target surface PS may include the polishing target surface PS1 facing to a direction that intersects with (especially, that is perpendicular to) the layered direction of the structural layers SL. The polishing target surface PS1 may include surfaces of the plurality of structural layers SL. Furthermore, there is a possibility that the surface of the three-dimensional structural object ST includes a surface that is inclined with respect to the layered direction of the structural layers SL (namely, that intersects with the layered direction of the structural layers SL by an angle other than 90 degree). In this case, the polishing target surface PS may include a surface that is inclined with respect to the layered direction of the structural layers SL. Namely, the polishing target surface PS may include a polishing target surface PS2 that is inclined with respect to the layered direction of the structural layers SL. In other words, the polishing target surface PS may include the polishing target surface PS2 facing to a direction that intersects with (however, that is not perpendicular to) the layered direction of the structural layers SL. The polishing target surface PS2 may include surfaces of the plurality of structural layers SL. Furthermore, there is a possibility that the surface of the three-dimensional structural object ST includes a surface (namely, a surface along the XY plane) that is perpendicular to the layered direction of the structural layers SL. In this case, the polishing target surface PS may include a surface that is perpendicular to the layered direction of the structural layers SL. Namely, the polishing target surface PS may include a polishing target surface PS3 that is perpendicular to the layered direction of the structural layers SL. In other words, the polishing target surface PS may include the polishing target surface PS3 facing to the layered direction of the structural layers SL. Note that each of the polishing target surfaces PS1 to PS3 may be a surface including a planar surface and may be a surface including a curves surface. Note that the layered direction of the structural layers SL may be inclined with respect to the Z axis direction. In this case, a direction that is a direction in a surface of the polishing target surface PS2 and that includes a Z axis direction component may be referred to as the layered direction, when the polishing target surface PS2 is used as one example.

There is a possibility that the polishing target surface PS is a relatively rough surface (namely, a surface having concavity and convexity) that may smoothed (alternatively, that is flatted or whose roughness is decreased) by the polishing of the polishing operation.

For example, as described above, in the present embodiment, the three-dimensional structural object ST is formed by melting and re-solidifying the powder-like or grain-like build materials M. Thus, there is a possibility that the non-molten build material M is adhered to at least a part of the surface of the three-dimensional structural object ST. In this case, the surface to which the non-molten build material M is adhered may be the relatively rough surface that may be smoothed by the polishing operation. Furthermore, there is a possibility that the build material M that is solidified again in an undesired shape is adhered to at least a part of the surface of the three-dimensional structural object ST. In this case, the surface to which the build material M that is solidified again in the undesired shape is adhered may be the relatively rough surface that is smoothed by the polishing operation.

For example, as described above, in the present embodiment, the build head 41 moves along each of the X axis and the Y axis (namely, along the XY plane) in a period when each structural layer SL is formed. In this case, there is a possibility that a cyclic or non-cyclic concavity and convexity exists in accordance with a moving pattern (typically, a pitch of the movement) of the build head 41 at at least a part of the surface of the structural layers SL along the XY plane (as a result, the surface of the three-dimensional structural object ST), depending on a relative moving aspect of the build head 41 relative to the build surface CS. In this case, the surface at which the cyclic or non-cyclic concavity and convexity exists may be the relatively rough surface that may be smoothed by the polishing operation.

For example, as described above, in the present embodiment, the three-dimensional structural object ST is formed by laminating the plurality of structural layers SL. In this case, there is a possibility that a cyclic or non-cyclic concavity and convexity exists in accordance with pitch of the layer of the plurality of structural layers SL at the surface (especially, a surface that faces to a direction intersecting with the layered direction of the structural layers SL and that is a surface along or inclined with respect to the layered direction) of the three-dimensional structural object ST. In this case, the surface at which the cyclic or non-cyclic concavity and convexity exists may be the relatively rough surface that may be smoothed by the polishing operation.

In order to perform the polishing operation to the polishing target surface PS, the build system 1 firstly gets a shape information relating to the shape of the surface of the three-dimensional structural object ST under the control of the control apparatus 7. The shape information may include an information relating to the measured result of the measurement apparatus 45. Moreover, the shape information may include an information relating to a measured result of a three-dimensional measurement apparatus provided outside the build system 1. In this case, the measurement apparatus 45 measures the shape of the surface of the three-dimensional structural object ST after the three-dimensional structural object ST is formed by the build operation. Then, the measurement apparatus 45 outputs the measured result to the control apparatus 7. Alternatively, the shape information may include an information relating to the three-dimensional model data used by the build operation (namely, used when the three-dimensional structural object ST is formed).

After getting the shape information, the build system 1 determines the polishing target surface PS under the control of the control apparatus 7. For example, the control apparatus 7 may set at least a part of a surface that is along the layered direction of the structural layers SL and that is the surface of the three-dimensional structural object ST to the polishing target surface PS (namely, the polishing target surface PS1). For example, the control apparatus 7 may set at least a part of a surface that is inclined with respect to the layered direction of the structural layers SL and that is the surface of the three-dimensional structural object ST to the polishing target surface PS (namely, the polishing target surface PS2). For example, the control apparatus 7 may set at least a part of a surface that is perpendicular to the layered direction of the structural layers SL and that is the surface of the three-dimensional structural object ST to the polishing target surface PS (namely, the polishing target surface PS3). For example, the control apparatus 7 may set at least a part of an outer surface (namely, a surface that constitutes the appearance of the three-dimensional structural object ST and that is observable from the outside) of the surface of the three-dimensional structural object ST to the polishing target surface PS. In this case, the control apparatus 7 may also determine at least one of relative position and attitude of the polishing target surface PS relative to at least one of the irradiation system 411 and the stage 43.

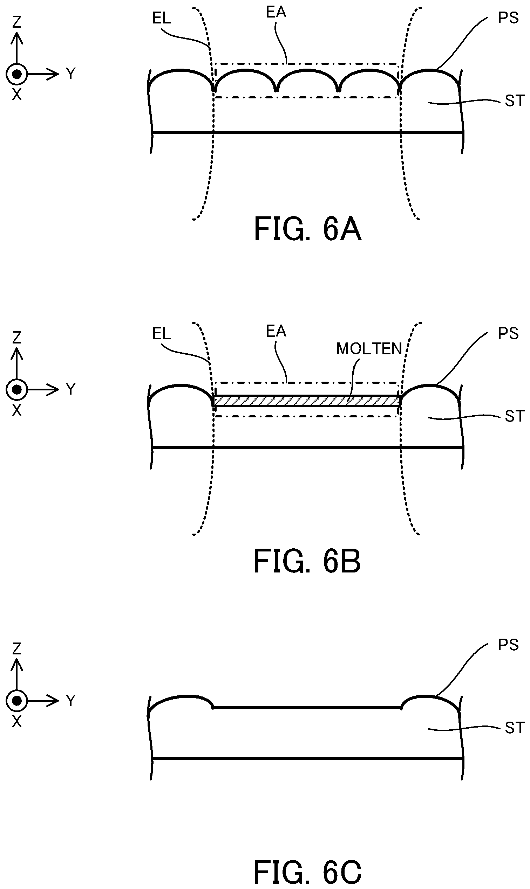

Then, the build system 1 polishes the polishing target surface PS by irradiating the polishing target surface PS with the light EL under the control of the control apparatus 7. Namely, in the present embodiment, the polishing target surface PS is polished by the light EL. Specifically, as illustrated in FIG. 6A, the control apparatus 7 sets the irradiation area EA at a certain area part on the polishing target surface PS on the basis of the shape information and irradiates the irradiation area EA with the light EL. Note that FIG. 6A illustrates an example in which the polishing target surface PS is the surface at which the cyclic or non-cyclic concavity and convexity exists. In this case, the control apparatus 7 sets the irradiation area EA at a desired area part on the polishing target surface PS by moving at least one of the build head 41 and the stage 43, if needed. When the irradiation area EA is irradiated with the light EL, the build material M in the area part on the polishing target surface PS at which the irradiation area EA is set is molten again by the light EL as illustrated in FIG. 6B. When the build material M that is solidified to form the concavity and convexity is molten, the surface (namely, a boundary surface) of the molten build material M comes to be close to the flat surface or becomes the flat surface due to an action of at least one of a weight and a surface tension of the molten build material M. Namely, a smoothness of the surface (namely, the boundary surface) of the molten build material M improves. Then, when the molten build material M is not irradiated with the light EL due to the movement of the build head 41, the molten build materials M is cooled and solidified (namely, coagulated) again. As a result, as illustrated in FIG. 6C, the build materials M that is solidified again to have a smoothed surface (alternatively, having an improved flatness and / or having a decreased roughness) constitutes the surface of the three-dimensional structural object ST. The polishing target surface PS is polished in this manner.

The control apparatus 7 repeats a series of polishing process including: melting the build material M by the irradiation of the light EL; and re-solidifying the molten build materials M while relatively moving the build head 41 relative to the three-dimensional structural object ST on the basis of the shape information. Namely, the control apparatus 7 repeats the series of the polishing process while relatively moving the irradiation area EA relative to the polishing target surface PS on the basis of the shape information.

However, as described above, there is a possibility that the three-dimensional structural object ST includes a plurality of polishing target surfaces PS that are not parallel with each other (namely, that are directed to different directions). In this case, there is a possibility that whole of the polishing target surface PS is not irradiated with the light EL only by moving the build head 41 along at least one of the X axis, the Y axis and the Z axis. For example, when a first polishing target surface PS that is a planar surface is polished by irradiating the first polishing target surface PS with the light EL and then a second polishing target surface PS that is not parallel with the first polishing target surface PS is polished, it is difficult to irradiate the second polishing target surface PS with the light EL only by moving the build head 41 along at least one of the X axis, the Y axis and the Z axis. More specifically, in an example illustrated in FIG. 5A and FIG. 5B, when at least one of the polishing target surfaces PS1 to PS3 is polished by irradiating at least one of the polishing target surfaces PS1 to PS3 with the light EL and then at least another one of the polishing target surfaces PS1 to PS3 is polished, it is difficult to move the build head 41 to a position from which the build head 41 irradiates at least another one of the polishing target surfaces PS1 to PS3 with the light EL only by moving the build head 41 along at least one of the X axis, the Y axis and the Z axis.

Thus, in the polishing operation, the control apparatus 7 may relatively move the build head 41 and the three-dimensional structural object ST by moving the stage 43 in addition to or instead of moving the build head 41. Namely, the control apparatus 7 repeats the series of polishing process while relatively moving the irradiation area EA relative to the polishing target surface PS and changing the attitude of the three-dimensional structural object ST relative to the irradiation system 411 on the basis of the shape information. Specifically, in the example illustrated in FIG. 5A and FIG. 5B, the control apparatus 7 moves the stage 43 so that the attitude of the three-dimensional structural object ST becomes a first attitude that allows the polishing target surface PS1 to face to a first direction by which at least one of the polishing target surfaces PS1 to PS3 (for example, the polishing target surface PS1) is irradiated with the light EL. Then, the control apparatus 7 repeats the series of polishing process while relatively moving the irradiation area EA relative to the polishing target surface PS1 on the basis of the shape information in a state where the attitude of the three-dimensional structural object ST becomes the first attitude. After the polishing of the polishing target surface PS1 is completed, the control apparatus 7 moves the stage 43 so that the attitude of the three-dimensional structural object ST becomes a second attitude that allows the polishing target surface PS2 to face to a second direction by which at least another one of the polishing target surfaces PS1 to PS3 (for example, the polishing target surface PS2) is irradiated with the light EL. Then, the control apparatus 7 repeats the series of polishing process while relatively moving the irradiation area EA relative to the polishing target surface PS2 on the basis of the shape information in a state where the attitude of the three-dimensional structural object ST becomes the second attitude. Then, same operation is repeated until the polishing of all of the polishing target surfaces PS is completed. As a result, any polishing target surface PS is irradiated with the light EL.

### (2-3) Operation Condition in Polishing Operation

In the present embodiment, the control apparatus 7 may perform the polishing operation so that a first operation condition relating to the light EL that is used by the polishing operation is satisfied. The control apparatus 7 may perform the polishing operation so that a second operation condition relating to the polishing target surface PS is satisfied in addition to or instead of the first operation condition. In the below described description, the first operation condition and the second operation condition will be described in order.

### (2-3-1) First Operation Condition relating to Light EL

### (2-3-1-1) Light Intensity Condition relating to Intensity of Light EL

The first operation condition may include a light intensity condition relating to the intensity (especially, the intensity per unit area on the polishing target surface PS or the intensity per unit area in the irradiation area EA set on the polishing target surface PS) of the light EL. Here, a fluence [W/cm²] may be used as a unit of the intensity of the light EL. The light intensity condition may include a first intensity condition that the intensity of the light EL used by the polishing operation is lower than the intensity of the light EL used by the build operation. When the polishing operation is performed so that the intensity condition including the first intensity condition is satisfied, the build material M is not excessively molten by the irradiation of the light EL. Specifically, an amount of the molten build material M is not too large by the irradiation of the light EL and thus the shape of the surface of the three-dimensional structural object ST does not change in an undesired manner. For example, the amount of the molten build material M is not too large and thus the build material M molten by the irradiation of the light EL does not drip downwardly. Thus, the build system 1 performs the polishing operation without changing the shape of the three-dimensional structural object ST in the undesired manner.

The light intensity condition may include a second intensity condition that the intensity of the light EL used by the polishing operation becomes a predetermined intensity that is set not to be large so that the shape of the surface of the three-dimensional structural object ST does not change in the undesired manner due to the large amount of the build materials M being molten. However, as described above, in the present embodiment, the polishing target surface PS is polished by melting the build materials M by the irradiation of the light EL. Thus, if the intensity of the light EL used by the polishing operation is equal to or lower than an intensity that does not allow the build materials M to be molten, the build system 1 is not capable of polishing the polishing target surface PS by the irradiation of the light EL. Thus, the predetermined intensity is an intensity that is so high that the build materials M are molten. When the polishing operation is performed so that the light intensity condition including the second intensity condition is satisfied, the build system 1 performs the polishing operation without changing the shape of the three-dimensional structural object ST in the undesired manner.

Note that a value corresponding to N1 (note that N1 is larger than zero) percent of the intensity of the light EL used by the build operation is one example of the predetermined intensity used by the second intensity condition. N1 may be smaller than 100, may be smaller than 70, may be smaller than 50 or may be smaller than 30. When N1 is smaller than 100, the second intensity condition corresponds to one specific example of the above described first intensity condition. Alternatively, a value corresponding to 1/N2 (note that N2 is larger than 1) times of the intensity of the light EL used by the build operation is one example of the predetermined intensity used by the second intensity condition. N2 may be equal to or larger than 1, may be equal to or larger than 2, may be equal to or larger than 3 or may be equal to or larger than 4. When N2 is larger than 1, the second intensity condition corresponds to one specific example of the above described first intensity condition.

Moreover, the second intensity condition may be determined on the basis of an experiment or a simulation or both of them, for example. Moreover, the second intensity condition may be determined on the basis of the build material M.

In order to satisfy the light intensity condition, the control apparatus 7 may control the intensity of the light EL by controlling the light source 5. For example, the control apparatus 7 may control the intensity of the light EL emitted from the light source 5.

In order to satisfy the light intensity condition, the control apparatus 7 may control the intensity of the light EL by controlling the irradiation system 411. For example, the control apparatus 7 may control the intensity of the light EL by controlling an optical member of the irradiation system 411 for controlling the intensity of the light EL. For example, the control apparatus 7 may control the intensity of the light EL by controlling an optical member of the irradiation system 411 for controlling an intensity distribution of the light EL in the irradiation area EA. At least one of a filter having a desired density distribution in a plane that intersects with an optical path of the light EL, an aspheric optical member (for example, a refractive type of optical member or a reflective type of optical member) having a surface shape in the plane that intersects with the optical path of the light EL, a diffractive optical member, a spatial light modulator and the like may be used as the optical member for controlling at least one of the intensity and the intensity distribution, for example. For example, the control apparatus 7 may control the intensity of the light EL by controlling an optical member of the irradiation system 411 for controlling a light concentration position (in other words, a defocus amount) of the light EL. This is because the intensity of the light EL becomes lower on the polishing target surface PS as the light concentration position is away from the polishing target surface PS more (namely, the defocus amount becomes larger). Thus, the control apparatus 7 may control the light concentration position so that the light concentration position in the polishing operation is different from the light concentration position in the build operation. Specifically, the control apparatus 7 may control the light concentration position so that a shift amount of the light concentration position from the polishing target surface PS (namely, the defocus amount) in the polishing operation is different from a shift amount of the light concentration position from the build surface CS in the build operation. A condensing optical member and the like may be used as the optical member for controlling the light concentration position, for example.

In order to satisfy the light intensity condition, the control apparatus 7 may control the intensity of the light EL by controlling at least one of the head driving system 42 and the stage driving system 44. Specifically, the control apparatus 7 may control at least one of the head driving system 42 and the stage driving system 44 so that the build head 41 (especially, the irradiation system 411) moves relative to the polishing target surface PS along the Z axis. When the irradiation system 411 moves relative to the polishing target surface PS along the Z axis, an interval between the polishing target surface PS and the irradiation system 411 changes. When the interval between the polishing target surface PS and the irradiation system 411 changes, the light concentration position of the light EL relative to the polishing target surface PS changes. Thus, an operation of moving the irradiation system 411 relative to the polishing target surface PS is equivalent to an operation of controlling the light concentration position of the light EL. In this case, the control apparatus 7 may control at least one of the head driving system 42 and the stage driving system 44 so that the interval between the polishing target surface PS and the irradiation system 411 when the polishing operation is performed is larger than the interval between the polishing target surface PS and the irradiation system 411 when the build operation is performed.

In order to satisfy the light intensity condition, the control apparatus 7 may control the intensity of the light EL by controlling any characteristic of the light EL that is correlated with the intensity of the light EL. At least one of a size, a shape and a position of the irradiation area EA on the polishing target surface PS is one example of any characteristic of the light EL. This is because the intensity of the light EL on the polishing target surface PS changes when at least one of the size, the shape and the position of the irradiation area EA on the polishing target surface PS changes. For example, the intensity of the light becomes lower in the irradiation area EA as the irradiation area EA becomes larger. Thus, the control apparatus 7 may control the size of the irradiation area EA so that the irradiation area EA used by the polishing operation is larger than the irradiation area EA used by the build operation. As a result, the first intensity condition that the intensity of the light EL used by the polishing operation is lower than the intensity of the light EL used by the build operation is satisfied. Moreover, a time necessary for the polishing operation becomes shorter as the irradiation area EA becomes larger, for example. For example, the control apparatus 7 may set the irradiation area EA that is larger than the irradiation area EA used by the build operation within a range satisfying the second intensity condition.

Incidentally, when the three-dimensional structural object ST that is the polishing target object is built by using different materials at the parts, the light intensity condition that is different for each part on the three-dimensional structural object ST (the polishing target object) may be set on the basis of the characteristic of the build materials. Note that the light intensity condition that is different for each part on the polishing target surface PS may be set within a range satisfying the second intensity condition even when the three-dimensional structural object ST is made from one kind of build materials M.

Moreover, in the above described description, although the intensity is used CW laser (Continuous Wave Laser), the light intensity condition may be defined by whole energy included in one pulse instead of the intensity when a pulsed laser is used as the light source. Namely, the first operation condition may be a light energy condition relating to the energy of the light EL (an energy per unit area on the polishing target surface PS or an energy per unit area in the irradiation area EA set on the polishing target surface PS, same applies to the following description when there is no specific notation) and may be a condition that the energy of the light EL used by the polishing operation is smaller than the energy of the light EL used by the build operation. Moreover, the second operation condition may be a condition that the energy of the light EL used by the polishing operation is larger than the energy that allows the build material M to be molten. Here, a value of integral of the intensity of the light EL per one pulse [∑W/cm²] may be used as the energy of the light EL. Incidentally, when the light EL is the pulsed light, the intensity of the light EL on the irradiation area EA becomes larger as an ON time of the pulsed light becomes longer (in other words, an OFF time of the pulsed light becomes shorter). Thus, when the light EL is the pulsed light, the control apparatus 7 may control a duty ratio of the light EL emitted from the light source 5.

### (2-3-1-2) Irradiation Size Condition relating to Size of Irradiation Area EA irradiated with Light EL

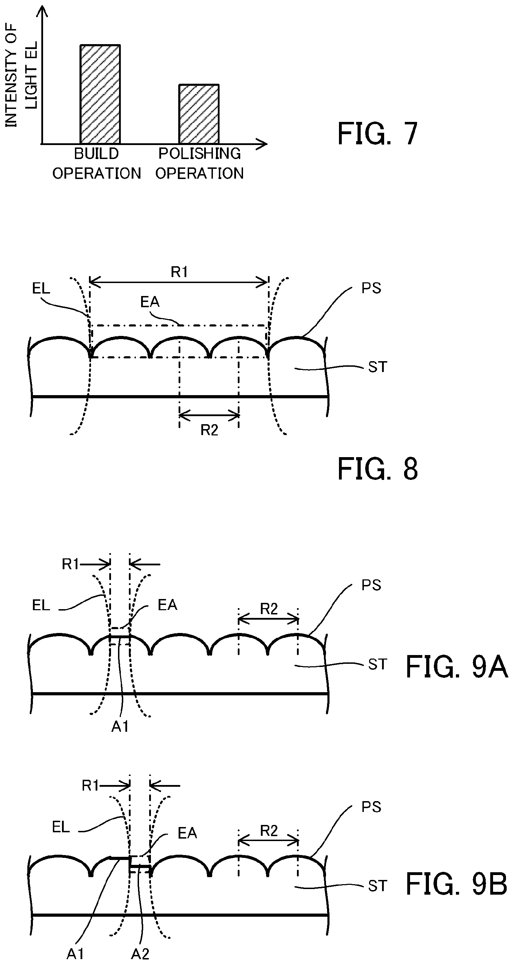

The first operation condition may include an irradiation size condition relating to the size (especially, a size in a direction along the polishing target surface PS) of the irradiation area EA that is irradiated with the light EL. The irradiation size condition may include a first size condition that a size R1 of the irradiation area EA (specifically, a width of the irradiation area EA in the direction along the polishing target surface PS) that is set at a certain area part of the polishing target surface PS is larger than a pitch R2 of concavity and convexity existing at this area part, as illustrated in FIG. 8. Note that the pitch R2 of the concavity and convexity means a distance (namely, a distance along the polishing target surface PS) between two adjacent concavity part that sandwich a certain convexity part or a distance (namely, a distance along the polishing target surface PS) between center positions of two adjacent convexity part that sandwich a certain concavity part. Note that the pitch R2 of the concavity and convexity may mean a width of a certain concavity part along the polishing target surface PS or a width of a certain convexity part along the polishing target surface PS.

Here, if the irradiation size condition including the first size condition is not satisfied, the size R1 of the irradiation area EA is smaller than the pitch R2 of concavity and convexity existing at the area part. Thus, as illustrated in FIG. 9A and FIG. 9B, only a part of one convexity part (alternatively, only a part of one concavity part) is included in the irradiation area EA of the light EL. In other words, a border between the plurality of convexity parts is not included in the irradiation area EA of the light EL. In this case, a first part A1 of one convexity part is polished by irradiating the first part A1 with the light EL as illustrated in FIG. 9A, and then, a second part A2 of one convexity part is polished by irradiating the second part A2 with the light EL as illustrated in FIG. 9B. As a result, same convexity part is partially polished plurality of times, and thus, there is a possibility that the convexity part is not polished so that the first part A1 and the second part A2 are located in same plane. Namely, there is a possibility that a macro smoothness of the polishing target surface PS on which the polishing operation is performed deteriorates. However, even in this case, the fact remains that the polishing target surface PS is smoothened in a micro order compared to the case where the polishing operation is not performed.

On the other hand, when the polishing operation is performed so that the irradiation size condition including the first size condition is satisfied, whole of one convexity part (alternatively, whole of one concavity part) is included in the irradiation area EA of the light EL as illustrated in FIG. 8. In other words, the border between the plurality of convexity parts is included in the irradiation area EA of the light EL. In this case, whole of one convexity part located in the irradiation area EA is polished by the irradiation of the light EL at one time (see the above described FIG. 6C). As a result, the polishing target surface PS is polished more properly compared to the case where the polishing operation is performed so that the irradiation size condition including the first size condition is not satisfied. Namely, the concavity and convexity remaining in the polishing target surface PS becomes relatively small. Therefore, the polishing target surface PS is polished by the build system 1 so that the polishing target surface PS is a relatively smooth surface.

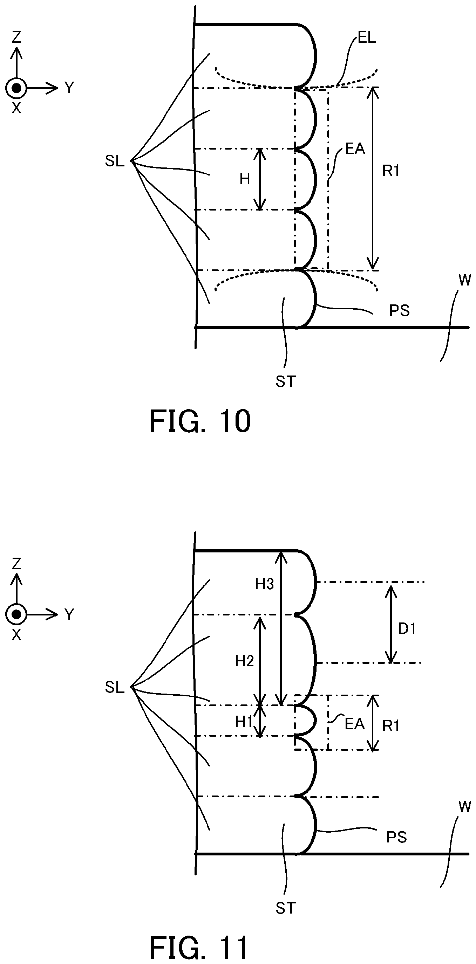

As described above, there is a possibility that the cyclic or non-cyclic concavity and convexity exists in accordance with the pitch of the layer of the plurality of structural layers SL at the polishing target surface PS (see FIG. 10). There is a relatively high possibility that this concavity and convexity exists when the polishing target surface PS includes at least one of polishing target surfaces PS1 and PS2 facing to a direction that intersects with the layered direction of the structural layers SL. In this case, as illustrated in FIG. 10, the pitch R2 of the concavity and convexity is equivalent to a height (namely, a thickness) of the structural layer SL. Therefore, the irradiation size condition may include a second size condition that the size R1 of the irradiation area EA that is set at a certain area part of the polishing target surface PS is larger than the height H of the structural layer SL formed at this area part, as illustrated in FIG. 10. When the polishing operation is performed on at least one of the polishing target surfaces PS1 and PS2 facing to the direction that intersects with the layered direction of the structural layers SL so that the irradiation size condition including the second size condition is satisfied, the irradiation area EA is set to bridge over the plurality of structural layers SL as illustrated in FIG. 10. Namely, the irradiation area EA is set to bridge over one structural layer SL and at least another one structural layer SL formed on this one structural layer SL. As a result, whole of one convexity part (alternatively, whole of one concavity part, same applies to the below descried description) that corresponds to side edge part of the structural layer SL is included in the irradiation area EA of the light EL. Namely, a border between one structural layer SL and at least another one structural layer SL formed on this one structural layer SL is irradiated with the light EL, and thus, one structural layer SL and at least another one structural layer SL are polished so that the border is inconspicuous. As a result, the polishing target surface PS is polished by the build system 1 so that the polishing target surface PS is a relatively smooth surface, as with the case where the polishing operation is performed so that the irradiation size condition including the first size condition is satisfied.

Note that the heights H of the plurality of structural layers SL constituting the three-dimensional structural object ST are not always same. Specifically, as illustrated in FIG. 11, there is a possibility that a height H1 of one structural layer SL constituting the three-dimensional structural object ST is smaller than a height H2 of another structural layer SL. In this case, if the second size condition that the size R1 of the irradiation area EA is larger than the height H1 of the relatively low structural layer SL, there is a possibility that whole of one convexity part (alternatively, whole of one concavity part, same applies to the below descried description) that corresponds to the side edge part of the relatively high structural layer SL is not included in the irradiation area EA of the light EL in some cases, as illustrated in FIG. 11. Thus, the irradiation size condition may include a third size condition that the size R1 of the irradiation area EA that is set at a certain area part of the polishing target surface PS is larger than the height H (the height H2 in an example illustrated in FIG. 11) of the highest structural layer SL of the plurality of structural layers SL formed at this area part. In this case, the polishing target surface PS is polished by the build system 1 so that the polishing target surface PS is a relatively smooth surface. Alternatively, the irradiation size condition may include a fourth size condition that the size R1 of the irradiation area EA that is set at a certain area part of the polishing target surface PS is larger than an interval D1 (see FIG. 11) between center positions (specifically, the center positions along the layered direction of the structural layers SL) of adjacent two or more structural layers SL formed at this area part. In other words, the irradiation size condition may include a fifth size condition that the size R1 of the irradiation area EA that is set at a certain area part of the polishing target surface PS is larger than an average value of the heights of the adjacent two or more structural layers SL formed at this area part. In the example illustrated in FIG. 11, the fifth size condition may include a condition that the size R1 of the irradiation area EA is larger than "(HI + H2) / 2" that is an average value of the height H1 of one structural layer SL and the height H2 of another structural layer SL formed on this one structural layer SL. Alternatively, in the example illustrated in FIG. 11, the fifth size condition may include a condition that the size R1 of the irradiation area EA is larger than "(H1 + H3) / 2" that is an average value of the height H1 of one structural layer SL and a height H3 of plurality of (in the example illustrated in FIG. 11, two) structural layers SL formed on this one structural layer SL.

In order to satisfy the irradiation size condition, the control apparatus 7 may control the irradiation system 411. For example, the control apparatus 7 may control the size of the irradiation area EA by controlling an optical member of the irradiation system 411 for controlling the size of the irradiation area EA. At least one of a collecting optical element that is allowed to change a collecting state by changing a position or attitude thereof, a diaphragm member that is allowed to change at least one of a shape and a size of an aperture through which the light EL is allowed to pass, a light forming member that is allowed to variably set an area through which the light EL is allowed to pass and an area that shields the light in a plane intersecting with an optical axis of the irradiation system 411 (namely, a plane intersecting with a propagating direction of the light EL) and the like is one example of this optical member. Alternatively, the size of the irradiation area EA changes when a relative position (especially, an attitude) of the polishing target surface PS relative to the irradiation system 411 changes, and thus, the control apparatus 7 may control the size of the irradiation area EA by controlling at least one of the head driving system 42 and the stage driving system 44 to control the relative position (especially, the attitude) of the polishing target surface PS relative to the irradiation system 411. When the size of the irradiation area EA is controlled, the control apparatus 7 may determine the pitch R2 of concavity and convexity existing at the polishing target surface PS on the basis of the above described shape information and control the size of the irradiation area EA so that the irradiation size condition determined based on the determined pitch R is satisfied. Thus, the above described shape information may include an information relating to a shape of concavity and convexity existing at the polishing target surface PS.

### (2-3-1-3) Light Direction Condition relating to Direction of Light EL propagating to Irradiation Area EA

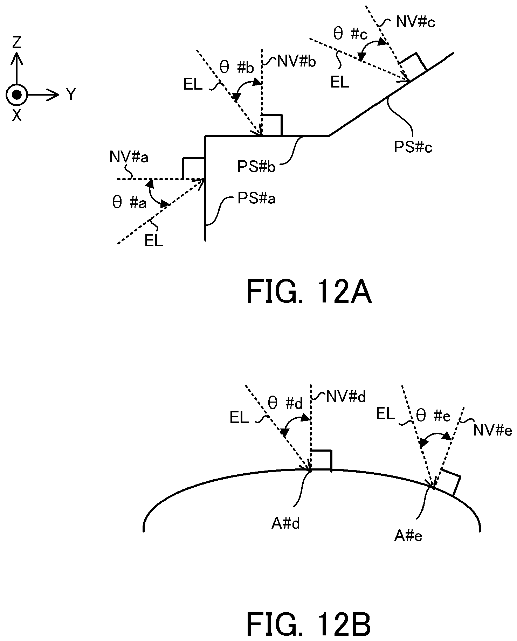

The first operation condition may include a light direction condition relating to a direction of the light EL that propagates to the irradiation area EA. The light direction condition may include a first light direction condition that an angle θ between a normal line NV of the polishing target surface PS on which the irradiation area EA is set and an axis line of the light EL that propagates to the irradiation area EA does not change regardless of the position of the irradiation area EA. For example, as illustrated in FIG. 12A, when the polishing target surface PS includes a polishing target surface PS#a, a polishing target surface PS#b and a polishing target surface PS#C that are not parallel to one another, the first light direction condition is a condition that an angle θ#a between a normal line NV#a of the polishing target surface PS#a and an axis line of the light EL with which the polishing target surface PS#a is irradiated, an angle θ#b between a normal line NV#b of the polishing target surface PS#b and an axis line of the light EL with which the polishing target surface PS#b is irradiated and an angle θ#c between a normal line NV#c of the polishing target surface PS#c and an axis line of the light EL with which the polishing target surface PS#c is irradiated are same as one another. For example, as illustrated in FIG. 12B, when the polishing target surface PS is a curved surface, the first light direction condition is a condition that an angle θ#d between a normal line NV#d of a first part A#d of the polishing target surface PS and an axis line of the light EL with which the first part A#d is irradiated and an angle θ#e between a normal line NV#e of a second part A#e of the polishing target surface PS and an axis line of the light EL with which the second part A#e is irradiated are same as each other. When the polishing operation is performed so that the light direction condition including the first light direction condition is satisfied, the shape of a spot of the light EL (namely, the shape of the irradiation area EA) on the polishing target surface PS does not change regardless of the position of the irradiation area EA, compared to the case where the polishing operation is performed so that the light direction condition including the first light direction condition is not satisfied. Thus, build system 1 performs the polishing operation to polish the polishing target surface PS relatively accurately regardless of the position of the irradiation area EA. Note that the normal line when the polishing target surface PS is the curved surface may be a normal line of a tangent plane of the curved surface at a certain position on the curved surface. Therefore, the normal line NV#d of the first part A#d of the polishing target surface PS may be a normal line of the tangent plane that is tangent to the first part A#d and the normal line NV#e of the second part A#e of the polishing target surface PS may be a normal line of the tangent plane that is tangent to the second part A#e.

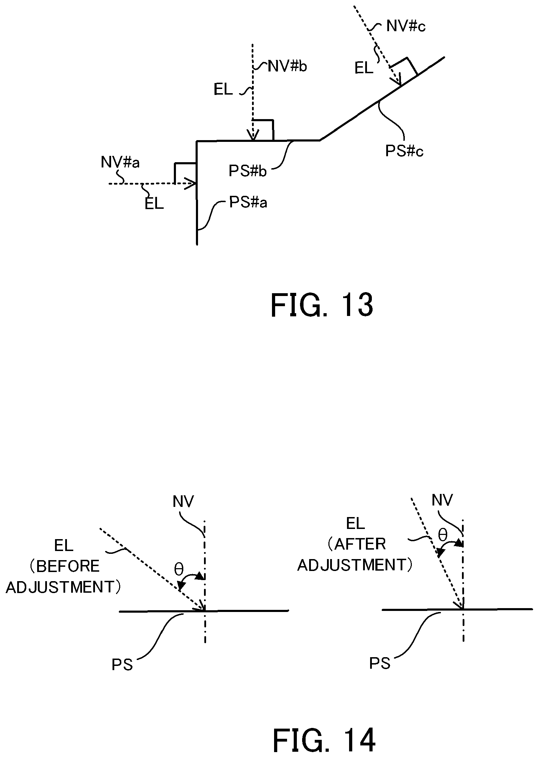

The light direction condition may include a second light direction condition that a direction of the normal line NV of the polishing target surface PS on which the irradiation area EA is set and a direction of the axis line of the light EL that propagates to the irradiation area EA are same as (in other words, coincident with) each other regardless of the irradiation area EA, as illustrated in FIG. 13. In other words, the light direction condition may include the second light direction condition that the angle θ between the normal line NV of the polishing target surface PS on which the irradiation area EA is set and the axis line of the light EL that propagates to the irradiation area EA is zero. Note that a state where "the angle θ is zero" here includes not only a state where the angle θ is absolutely coincident with zero but also a state where the angle θ is regarded as zero although the angle θ is not zero (namely, a state where the angle θ is nearly zero). When the polishing operation is performed so that the light direction condition including the second light direction condition is satisfied, the light EL vertically enters the polishing target surface PS. Therefore, when the polishing operation is performed so that the light direction condition including the second light direction condition is satisfied, the shape of the spot of the light EL (namely, the shape of the irradiation area EA) on the polishing target surface PS is close to an ideal shape (for example, an exact circle), compared to the case where the polishing operation is performed so that the light direction condition including the second light direction condition is not satisfied. Thus, build system 1 performs the polishing operation to polish the polishing target surface PS relatively accurately regardless of the position of the irradiation area EA.

The light direction condition may include a third light direction condition that the direction (namely, the direction of the axis line) of the light EL that propagates from the irradiation system 411 to the irradiation area EA is adjusted so that the angle θ between the normal line NV of the polishing target surface PS on which the irradiation area EA is set and the axis line of the light EL that propagates to the irradiation area EA decreases (namely, is close to zero), as illustrated in FIG. 14. When the polishing operation is performed by adjusting the direction of the light so that the light direction condition including the third light direction condition is satisfied, the shape of the spot of the light EL (namely, the shape of the irradiation area EA) on the polishing target surface PS is close to the ideal shape, compared to the case where the polishing operation is performed without adjusting the direction of the light EL. Thus, build system 1 performs the polishing operation to polish the polishing target surface PS relatively accurately regardless of the position of the irradiation area EA.

In order to satisfy the light direction condition, the control apparatus may control the irradiation system 411. For example, the direction (namely, the direction of the axis line) of the light EL that propagates to from the irradiation system 411 to the irradiation area EA changes when an emitting direction of the light EL from the irradiation system 411 changes. Thus, the control apparatus 7 may control the incident angle θ by controlling an optical member of the irradiation system 411 for controlling the direction in which the light EL is emitted from the irradiation system 411. An optical member (for example, a rotating mirror) that is allowed to deflect the light EL is one example of this optical member.

The direction (namely, the direction of the axis line) of the light EL that propagates from the irradiation system 411 to the irradiation area EA changes when an attitude of the three-dimensional structural object ST relative to the emitting direction of the light EL from the irradiation system 411 changes. Thus, in order to satisfy the light direction condition, the control apparatus 7 may change the attitude of the three-dimensional structural object ST relative to the emitting direction of the light EL by controlling the stage driving system 44. Alternatively, when the head driving system 42 is allowed to move the build head 41 (especially, the irradiation system 411) along at least one of the θX axis, the θY axis and the θZ axis as described later, the control apparatus 7 may change the attitude of the three-dimensional structural object ST relative to the emitting direction of the light EL by controlling the head driving system 42.

When at least one of the irradiation system 411, the head driving system 42 and the stage driving system 44 is controlled, the control apparatus 7 may determine a relative positional relationship between the irradiation system 411 and the polishing target surface PS on the basis of the above described shape information and control the direction of the light EL that propagates to the irradiation area EA on the basis of the determined positional relationship so that the direction of the light EL that propagates to the irradiation area EA satisfies the light direction condition. Thus, the above described shape information may include, as at least a part of the information relating to the shape of the polishing target surface PS, an information relating to the relative positional relationship between the irradiation system 411 and the polishing target surface PS.

Note that the direction of the axis line of the light EL directed to the irradiation area EA may be a direction of a principal ray of the light EL or may be a direction of an axis line that connects light amount center positions of the light EL in a plurality of cross-sectional planes in the propagating direction of the light EL.

### (2-3-2) Second Operation Condition relating to Polishing Target Surface PS

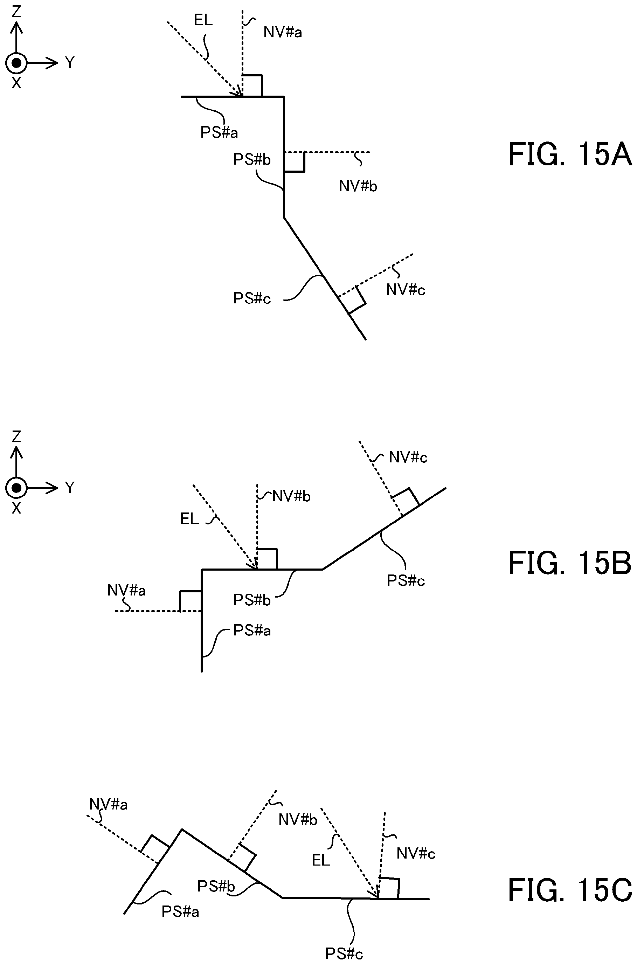

The second operation condition may include a surface direction condition relating to a direction to which the polishing target surface PS faces, as illustrated in FIG. 15A to FIG. 15C. The surface direction condition may include a first surface direction condition that the direction of the normal line NV of the polishing target surface PS on which the irradiation area EA is set does not change regardless of the position of the irradiation area EA as illustrated in FIG. 15A to FIG. 15C. Namely, the surface direction condition may include the first surface direction condition that the polishing target surface PS on which the irradiation area EA is set faces to the same direction regardless the position of the irradiation area EA. For example, as illustrated in FIG. 15A to FIG. 15C, when the polishing target surface PS includes the polishing target surface PS#a, the polishing target surface PS#b and the polishing target surface PS#c that are not parallel to one another, the first surface direction condition is a condition that a direction of the normal line NV#a of the polishing target surface PS#a when the irradiation area EA is set on the polishing target surface PS#a, a direction of the normal line NV#b of the polishing target surface PS#b when the irradiation area EA is set on the polishing target surface PS#b and a direction of the normal line NV#c of the polishing target surface PS#c when the irradiation area EA is set on the polishing target surface PS#c are same as one another. When the polishing target surface PS is a curved surface, the first surface direction condition is a condition that a direction of the first part A#d of the polishing target surface PS when the irradiation area EA is set on the first part A#d and a direction of the second part A#e of the polishing target surface PS when the irradiation area EA is set on the second part A#e are same as each other, although it is not illustrated in the drawings.

When the polishing operation is performed so that the light direction condition including the first surface direction condition is satisfied in an example illustrated in FIG. 15A to FIG. 15C, the control apparatus 7 repeats an operation for controlling the stage driving system 44 to allow the direction of the normal line NV of one polishing target surface PS of the plurality of polishing target surfaces PS to be a desired direction and then polishing one polishing target surface PS so that the plurality of polishing target surfaces PS are set to be one polishing target surface PS in order. Specifically, the control apparatus 7 controls the stage driving system 44 to move the stage 43 so that the attitude of the three-dimensional structural object ST becomes an attitude #a (for example, an attitude illustrated in FIG. 15A) by which one of the polishing target surfaces PS#a to PS#c (for example, the polishing target surface PS#a) faces to the desired direction. Then, the control apparatus 7 relatively moves the irradiation area EA relative to the polishing target surface PS#a on the basis of the shape information and repeats a series of polishing process on the polishing target surface PS#a in a state where the attitude of the three-dimensional structural object ST is the attitude #a. After completing polishing the polishing target surface PS#a, the control apparatus 7 controls the stage driving system 44 to move the stage 43 so that the attitude of the three-dimensional structural object ST becomes an attitude #b (for example, an attitude illustrated in FIG. 15B) by which another one of the polishing target surfaces PS#a to PS#c (for example, the polishing target surface PS#b) faces to the same desired direction. Then, the control apparatus 7 relatively moves the irradiation area EA relative to the polishing target surface PS#b on the basis of the shape information and repeats a series of polishing process on the polishing target surface PS#b in a state where the attitude of the three-dimensional structural object ST is the attitude #b. After completing polishing the polishing target surface PS#b, the control apparatus 7 controls the stage driving system 44 to move the stage 43 so that the attitude of the three-dimensional structural object ST becomes an attitude #c (for example, an attitude illustrated in FIG. 15C) by which remaining one of the polishing target surfaces PS#a to PS#c (for example, the polishing target surface PS#c) faces to the same desired direction. Then, the control apparatus 7 relatively moves the irradiation area EA relative to the polishing target surface PS#c on the basis of the shape information and repeats a series of polishing process on the polishing target surface PS#c in a state where the attitude of the three-dimensional structural object ST is the attitude #c. As a result, even when the three-dimensional structural object ST includes any polishing target surface PS, the polishing target surface PS is polished by the build system 1 in a state where the polishing target surface PS faces the same direction.

When the polishing operation is performed so that the light direction condition including the first surface direction condition is satisfied, there is less possibility that the shape of the spot of the light EL (namely, the shape of the irradiation area EA) on the polishing target surface PS changed depending on the position of the irradiation area EA, compared to the case where the polishing operation is performed so that the light direction condition including the first surface direction condition is not satisfied. Thus, build system 1 performs the polishing operation to polish the polishing target surface PS relatively accurately regardless of the position of the irradiation area EA.

The surface direction condition may include a second surface direction condition that the direction of the normal line NV of the polishing target surface PS on which the irradiation area EA is set is coincident with a gravity direction (namely, the Z axis direction) regardless of the position of the irradiation area EA. Namely, the surface direction condition may include the second surface direction condition that the polishing target surface PS on which the irradiation area EA is set is a horizontal surface (namely, is parallel to the XY plane) regardless the position of the irradiation area EA. A state where "the polishing target surface PS is the horizontal surface" includes not only a state where the polishing target surface PS is absolutely parallel to the XY plane but also a state where the polishing target surface PS is substantially regarded as the horizontal surface although the polishing target surface PS is not parallel to the XY plane (namely, a state where the polishing target surface PS is nearly horizontal surface). Note that each of FIG. 15A to FIG. 15C illustrates an example in which respective one of the direction of the normal line NV#a of the polishing target surface PS#a on which the irradiation area EA is set, the direction of the normal line NV#b of the polishing target surface PS#b on which the irradiation area EA is set and the direction of the normal line NV#c of the polishing target surface PS#c on which the irradiation area EA is set is coincident with the gravity direction.

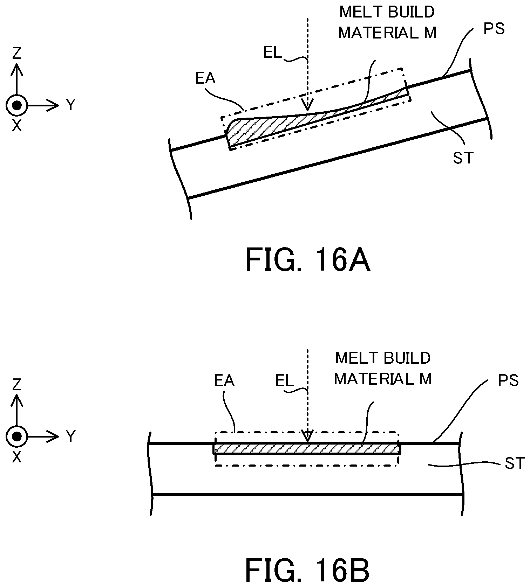

Here, if the polishing target surface PS is not the horizontal surface, there is a possibility that the build material M molten by the irradiation of the light EL unevenly distributes to be downward in the polishing target surface PS due to a weight of the molten build material M as illustrated in FIG. 16A. Namely, there is a possibility that a surface of the build material M molten by the irradiation of the light EL is not a flat surface. As a result, there is a possibility that the polishing target surface PS polished by the irradiation of the light EL is not a flat surface. Even in this case, the fact remains that the polishing target surface PS is smoothened compared to the case where the polishing operation is not performed. On the other hand, when the polishing target surface PS is the horizontal surface, there is a relatively high possibility that the build material M molten by the irradiation of the light EL evenly distributes in the polishing target surface PS due to at least one of the weight and a surface tension of the molten build material M as illustrated in FIG. 16B. Namely, there is a relatively high possibility that the surface of the build material M molten by the irradiation of the light EL is the flat surface. As a result, there is a high possibility that the polishing target surface PS polished by the irradiation of the light EL is the flat surface. Therefore, the build system 1 polishes the polishing target surface PS so that the polishing target surface PS is a smoother surface by performing the polishing operation so that the surface direction condition including the second surface direction condition is satisfied. Note that the second surface direction condition may be a condition that the attitude of the polishing target surface PS on which the irradiation area EA is set is unchanged regardless of the position of the irradiation area EA. In this case, unevenness of the build material M molten by the irradiation of the light EL is constant regardless of the position on the polishing target surface PS, and a polished state of the polishing target surface PS is even regardless of the position.

The surface direction condition may include a third surface direction condition that the polishing target surface PS on which the irradiation area EA is set faces upwardly and vertically (namely, toward the +Z side). When the polishing target surface PS faces upwardly and vertically, there is a relatively high possibility that the build material M molten by the irradiation of the light EL evenly distributes in the polishing target surface PS due to the weight of the molten build material M (see the above described FIG. 16B). Namely, there is a relatively high possibility that the surface of the build material M molten by the irradiation of the light EL is the flat surface. As a result, there is a high possibility that the polishing target surface PS polished by the irradiation of the light EL is the flat surface. Therefore, the build system 1 polishes the polishing target surface PS so that the polishing target surface PS is a smoother surface by performing the polishing operation so that the surface direction condition including the third surface direction condition is satisfied.

In order to satisfy the surface direction condition, the control apparatus 7 may control the stage driving system 44. Namely, the control apparatus 7 may control the attitude of the polishing target surface PS (namely, the attitude of the three-dimensional structural object ST) so that the surface direction condition is satisfied (namely, the polishing target surface PS is the horizontal surface). In other words, the control apparatus 7 may control a relative position of the polishing target surface PS relative to the light EL (namely, a relative position of the three-dimensional structural object ST relative to the light EL) so that the surface direction condition is satisfied. In this case, the control apparatus 7 may determine the direction of the normal line NV of the polishing target surface PS on the basis of the above described shape information and control the stage driving system 44 on the basis of the determined direction of the normal line NV so that the surface direction condition is satisfied. Thus, the above described shape information may include, as at least a part of the information relating to the shape of the polishing target surface PS, an information relating to the attitude of the polishing target surface PS. If the direction of the normal line NV of the polishing target surface PS is not the desired direction (for example, the gravity direction), the control apparatus 7 controls the stage driving system 44 so that the direction of the normal line NV of the polishing target surface PS is the desired direction. Then, after the direction of the normal line NV of the polishing target surface PS is the desired direction, the control apparatus starts polishing the polishing target surface PS.

Incidentally, when the polishing target surface PS is the curved surface, the direction to which the polishing target surface PS faces may be a direction of a normal line of a tangent plane of the curved surface at a certain position on the curved surface. For example, when the polishing target surface PS is the curved surface, the direction to which a first part on the polishing target surface PS may be a direction of a normal line of a tangent plane that is tangent to the first part.

Incidentally, although the processing operation using the light EL is performed after forming all of the structural layers SL (building the three-dimensional structural object ST) is completed in the above described embodiment, the processing operation using the light EL may performed on the three-dimensional structural object ST after some number of the structural layer(s) SL is formed and before all of the structural layers SL is formed.

### (3) Modified Example

Next, modified examples of the build system 1 will be described.

### (3-1) First Modified Example

Firstly, a first modified example of the build system 1 will be described. In the above described description, the build head 41 of the build system 1 emits both of the light EL used by the build operation and the light EL used by the polishing operation. Namely, an optical path of the light EL in the irradiation system 411 during a period when the build operation is performed is same as an optical path of the light EL in the irradiation system 411 during a period when the polishing operation is performed. On the other hand, a build system 1a in the first modified example is provided with a polishing head 41a that emits the light EL used by the polishing operation separately from the build head 41 that emits the light EL used by the build operation.

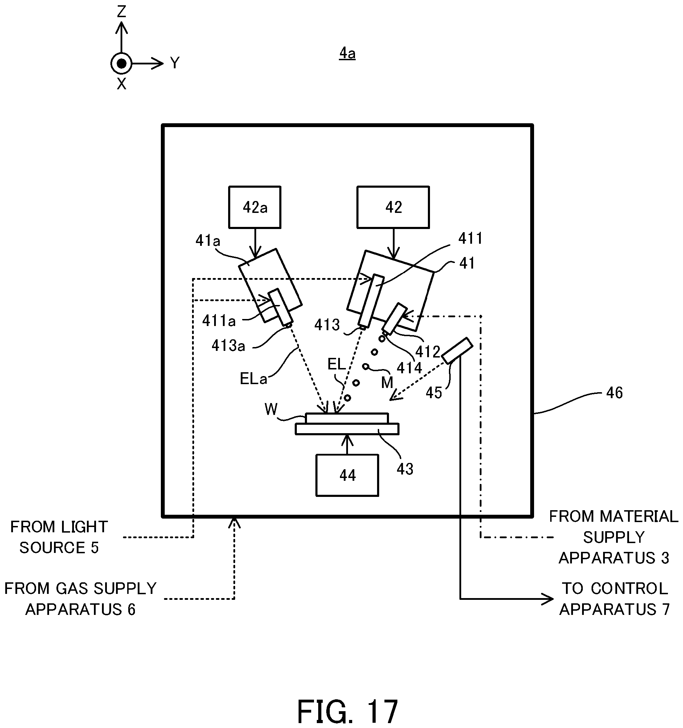

Specifically, the build system 1a is different from the build system 1 in that it is provided with a build apparatus 4a instead of the build apparatus 4. The build apparatus 4a is different from the build apparatus 4 in that it is provided with the polishing head 41a and a head driving system 42a. Other component of the build system 1a may be same as the build system 1. Thus, in the below described description, with reference to FIG. 17, the build apparatus 4a in the first modified example will be described. Note that a detailed description of the component that is same as the component of the build system 1 will be omitted by assigning the same reference number to it.

As illustrated in FIG. 17, the build apparatus 4a is provided with the polishing head 41a and the head driving system 42a in addition to the build head 41, the head driving system 42, the stage 43, the stage driving system 44 and the measurement apparatus 45 described above. The polishing head 41a is provided with an irradiation system 411a. Note that the head driving system 42 and the stage driving system 44 are simply illustrated in FIG. 17 for the purpose of simple drawing.

The irradiation system 411a is an optical system (for example, a condensing optical system) for emitting a light ELa from an emitting part 413a. Specifically, the irradiation system 411a is optically connected to the light source 5 that generates the light EL through a non-illustrated light transmitting member such as an optical fiber and light pipe. The irradiation system 411a emits, as the light ELa, the light EL transmitted from the light source 5 through the light transmitting member. Namely, the light EL generated by the light source 5 is divided into two lights EL by an optical dividing unit disposed between the light source 5 and the build apparatus 4a or in the build apparatus 4a and one light EL is transmitted to the build head 41 and the other one light EL is transmitted to the polishing head 41a. The irradiation system 411a emits the light ELa in a downward direction (namely, toward a -Z side) from the irradiation system 411a. The stage 43 is disposed below the irradiation system 411a. When the three-dimensional structural object ST is loaded on the stage 43, the irradiation system 411a is configured to emit the light ELa toward the three-dimensional structural object ST. Specifically, the irradiation system 411a irradiates a circular (alternatively, any other shaped) irradiation area EAa that is set on the polishing target surface PS as an area that is irradiated with the light ELa. Moreover, a state of the irradiation system 411a is switchable between a state where the irradiation area EAa is irradiated with the light ELa and a state where the irradiation area EAa is not irradiated with the light ELa under the control of the control apparatus 7.

The head driving system 42a moves the polishing head 41a. Specifically, the head driving system 42a moves the polishing head 41a along each of the X axis, the Y axis and the Z axis. Note that a structure of the head driving system 42a may be same as the structure of the head driving system 42. Therefore, a detailed description of the structure of the head driving system 42a is omitted.

Since the polishing head 41a is used separately from the build head 41, the polishing head 41a emits light ELa from the direction that is different from that of the build head 41. Namely, the polishing target surface PS is irradiated with the light ELa that transmits through an optical path that is different from the optical path of the light EL. Thus, the polishing head 41a is allowed to emit the light ELa in at least a part of a period when the build head 41 emits the light EL. Namely, the build system 1a is allowed to perform the build operation and the polishing operation in parallel. In other words, the build system 1a is allowed to overlap at least a part of a time interval (or a time) when the build operation is performed with at least a part of a time interval (or a time) when the polishing operation is performed or overlap at least a part of a timing at which the build operation is performed with at least a part of a timing at which the polishing operation is performed. Specifically, the build system 1a is allowed to polish the polishing target surface PS that is a part of the formed three-dimensional structural object ST by irradiating this polishing target surface PS with the light ELa in at least a part of a period when another part of the three-dimensional structural object ST is formed by irradiating the build surface CS with the light EL by the build head 41. As a result, a throughput for forming and polishing the three-dimensional structural object ST improves. Namely, the build system 1a in the first modified example achieves an effect that is same as the effect achievable by the above described build system 1 and improves the throughput for forming the polished three-dimensional structural object ST

Note that the build system 1a may perform the polishing operation after the three-dimensional structural object ST is formed by the build operation, even when the build apparatus 4a is provided with the polishing head 41a separately from the build head 41. Even in this case, the fact remains that the build system 1a in the first modified example achieves an effect that is same as the effect achievable by the above described build system 1.

Moreover, the polishing operation may be performed by using both of the build apparatus 4a and the polishing head 41a after the three-dimensional structural object ST is formed by the build operation.

Note that at least one of the polishing head 41a and the build head 41 is set so that an area that is irradiated with the light EL is different from an area that is irradiated with the light ELa when the three-dimensional structural object ST is irradiated with the light EL from the build head 41 and the light ELa from the polishing head 41a simultaneously in the above described embodiment, however, may be set so that same area is irradiated with the light EL and the light ELa or the area that is irradiated with the light EL partially overlaps with the area that is irradiated with the light ELa.

### (3-2) Second Modified Example

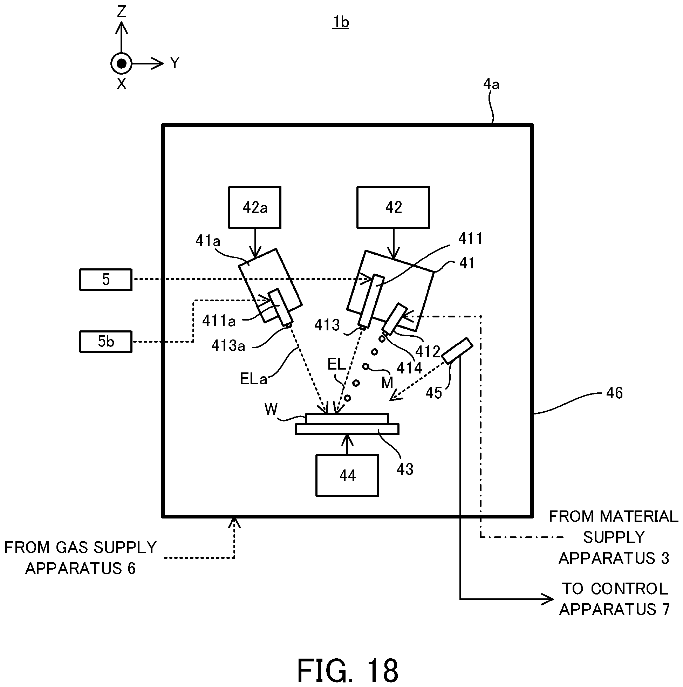

Next, with reference to FIG. 18, a second modified example of the build system 1 will be described. In the above described first modified example, the light EL emitted from common light source 5 is transmitted to the build head 41 and the polishing head 41a. On the other hand, a build system 1b in the second modified example is different from the build system 1a in the first modified example in that it is provided with an light source 5b that emits the light ELa used by the polishing operation separately from the light source 5 that emits the light EL used by the build operation, as illustrated in FIG. 18. Other component of the build system 1b may be same as the build system 1a. The build system 1b in the second modified example achieves an effect that is same as the effect achievable by the above described build system 1a in the first modified example.

Note that the light source 5a may emit the light ELa having a characteristic (for example, an intensity, a wavelength, a polarization and the like) that is same as that of the light EL emitted by the light source 5. The light source 5a may emit the light ELa having the characteristic (for example, the intensity, the wavelength, the polarization and the like) that is different from that of the light EL emitted by the light source 5. The light source 5a may emit an energy beam a type of which is different from that of the light EL emitted by the light source 5.

### (3-3) Third Modified Example

Next, a third modified example of the build system 1 will be described. A structure of a build system 1c in the third modified example is same as the structure of the above described build system 1. The build system 1c in the third modified example is different from the above described build system 1 in that it performs a deformation reduction operation for reducing a deformation of the three-dimensional structural object ST due to the polishing operation when the polishing operation is performed. In the below described description, a reason why the three-dimensional structural object ST is deformed by the polishing operation will be described firstly and then the deformation reduction operation for reducing the deformation will be described.

### (3-3-1) Reason why Three-dimensional Structural Object ST is deformed by Polishing Operation

When the polishing target surface PS is polished, the polishing target surface PS is irradiated with the light EL as described above. A heat is transferred to the polishing target surface PS from the light EL. This heat is transferred (substantially diffused) to an inside of the three-dimensional structural object ST through the polishing target surface PS. A diffusion degree of the heat (namely, an index that represents an easiness or difficulty of the diffusion) in the three-dimensional structural object ST is not always even depending on a characteristic (for example, at least one of a material, a shape and a density) of the three-dimensional structural object ST. Namely, there is a possibility that the polishing target surface PS includes areas having different characteristics (here, heat characteristics relating to the diffusion degree of the heat) to the heat transferred from the light EL. For example, there is a possibility that the polishing target surface PS includes an area in which the heat transferred from the light EL is not diffused relatively easily and an area in which the heat transferred from the light EL is diffused relatively easily.

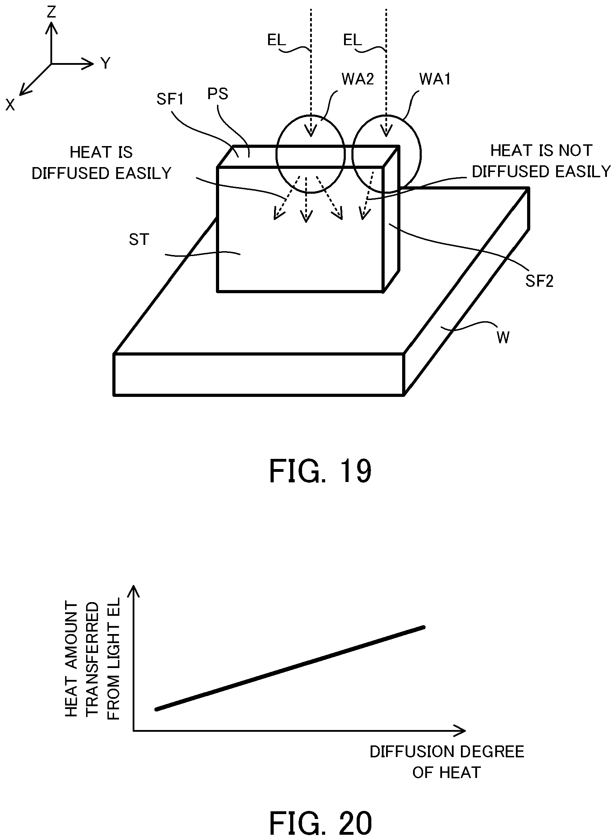

For example, as illustrated in FIG. 19, there is a possibility that the three-dimensional structural object ST has a surface SF2 that does not include the polishing target surface PS or that includes the polishing target surface PS on which the irradiation area EA is not set now (for example, will be set from now or has been already set) in addition to a surface SF1 including the polishing target surface PS on which the irradiation area EA is set. In this case, the diffusion degree of the heat transferred to a certain area part on the polishing target surface PS is presumable on the basis of a degree of a proximity of the certain area part on the polishing target surface PS and the surface SF2. Specifically, as illustrated in FIG. 19, an area WA1 on the polishing target surface PS is closer to the surface SF2 than an area WA2 on the polishing target surface PS is. Thus, a diffusion path (namely, a diffusion path inside the three-dimensional structural object ST) of the heat transferred to the area WA1 is smaller or fewer than a diffusion path of the heat transferred to the area WA2. Therefore, the shorter a distance between the certain area part on the polishing target surface PS and the surface SF2 is, the more difficult the heat transferred to the certain area part is diffused. Note that it can be said that the polishing target surface PS includes the area WA1 at which the heat transferred from the light EL is not diffused relatively easily and the area WA2 at which the heat transferred from the light EL is diffused relatively easily in an example illustrated in FIG. 19.

The area WA1 at which the heat is not diffused relatively easily stores the heat relatively easily, compared to the area WA2 at which the heat transferred from the light EL is diffused relatively easily. As a result, the area WA1 has a higher possibility that it is deformed by the heat than the area WA2 by a degree of an easiness of the storage of the heat. Thus, if the series of the polishing process is performed on the polishing target surface PS without considering the difference of the diffusion degree of the heat, there is a possibility that the polished three-dimensional structural object ST is deformed in an undesired manner depending on the difference of the diffusion degree of the heat.

Alternatively, when the three-dimensional structural object ST has a plurality of polishing target surfaces ST (for example, a plurality of polishing target surfaces PS that are parallel or are not parallel with each other), there is a possibility that there is a polishing target surface PS at which the heat transferred from the light EL is not diffused relatively easily and a polishing target surface PS at which the heat transferred from the light EL is diffused relatively easily. Even in this case, the polishing target surface PS at which the heat is not diffused relatively easily has a higher possibility that it is deformed by the heat than the polishing target surface PS at which the heat transferred from the light EL is diffused relatively easily. Thus, even in this case, there is a possibility that the polished three-dimensional structural object ST is deformed in an undesired manner depending on the difference of the diffusion degree of the heat.

Thus, in the third modified example, the control apparatus 7 (in other words, the build system 1 under the control of the control apparatus 7) performs the deformation reduction operation to reduce the deformation of the three-dimensional structural object ST due to the polishing operation (especially, due to the difference of the diffusion degree of the heat from the light EL).

### (3-3-2) Deformation Reduction Operation

The control apparatus 7 may perform the deformation reduction operation for reducing the deformation of the three-dimensional structural object ST by controlling an amount of the heat transferred from the light EL to the polishing target surface PS through the irradiation area EA. Specifically, as illustrated in FIG. 20, the control apparatus 7 may control the amount of the heat transferred from the light EL so that the amount of the heat transferred from the light EL becomes smaller as the heat is difficult to be diffused more. Namely, the control apparatus 7 may control the amount of the heat transferred from the light EL so that the amount of the heat transferred from the light EL to a certain area part on the polishing target surface PS becomes smaller as the heat transferred to the certain area part is difficult to be diffused more. For example, the control apparatus may control the amount of the heat transferred from the light EL so that the amount of the heat transferred from the light EL to the area WA1 at which the heat transferred from the light EL is not diffused relatively easily is smaller than the amount of the heat transferred from the light EL to the area WA2 at which the heat transferred from the light EL is diffused relatively easily. As a result, the amount of the heat transferred to the area part at which the heat is not diffused relatively easily is smaller than the amount of the heat transferred to the area part at which the heat is diffused relatively easily. When the amount of the heat transferred to a certain area part becomes small, the certain area part is difficult to be deformed. Thus, the area part at which the heat is not diffused relatively easily is prevented from being deformed due to the heat from the light EL. As a result, the deformation of the three-dimensional structural object ST due to the polishing operation (especially, due to the difference of the diffusion degree of the heat from the light EL).

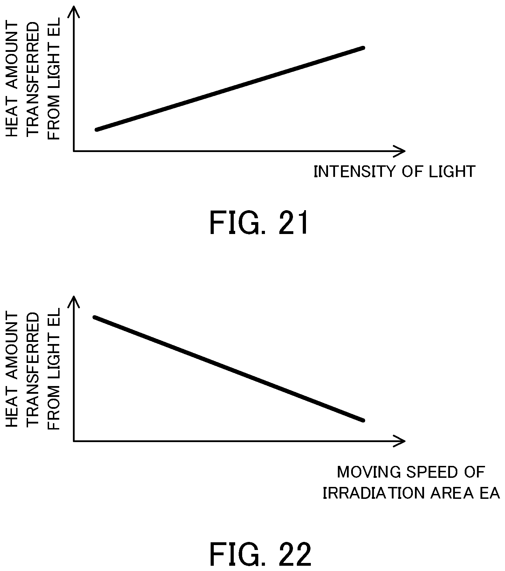

The control apparatus 7 may control the intensity or the energy (especially, the intensity or the energy per unit area) of the light EL on the irradiation area EA in order to control the amount of the heat transferred from the light EL. Specifically, as illustrated in FIG. 21, the amount of the heat transferred from the light EL becomes larger as the intensity or the energy of the light EL on the irradiation area EA becomes higher. Thus, the amount of the heat transferred from the light EL is controllable by the control apparatus 7 controlling the intensity or the energy of the light EL on the irradiation area EA. Namely, the control apparatus 7 may control the amount of the heat transferred from the light EL by controlling the intensity or the energy of the light EL on the irradiation area EA on the basis of a position of the irradiation area EA on the polishing target surface PS (namely, the diffusion degree of the heat at the area part of the polishing target surface PS on which the irradiation area EA is set). In this case, the control apparatus 7 may control the intensity or the energy of the light EL so that the intensity or the energy of the light EL becomes smaller as the heat is difficult to be diffused more. Namely, the control apparatus 7 may control the intensity or the energy of the light EL so that the intensity or the energy of the light EL with which a certain area part on the polishing target surface PS is irradiated becomes smaller as the heat transferred to the certain area part is difficult to be diffused more. Note that a detailed description of a method of controlling the intensity or the energy of the light EL is omitted, because it is already described when the light intensity condition used in performing the polishing operation is described.

The control apparatus 7 may control a relative moving speed of the irradiation area EA relative to the polishing target surface PS (namely, a relative moving speed of the irradiation area EA relative to the three-dimensional structural object ST) in order to control the amount of the heat transferred from the light EL. Specifically, a time during which the irradiation area EA is set on a certain area part on the polishing target surface PS becomes shorter as the moving speed of the irradiation area EA that is set on the certain area part becomes faster. In other words, a time during which a certain area part on the polishing target surface PS is irradiated with the light EL becomes shorter as the moving speed of the irradiation area EA that is set on the certain area part becomes faster. The amount of the heat transferred from the light EL to a certain area part on the polishing target surface PS becomes smaller as the time during which the irradiation area EA is set on the certain area part becomes shorter. Namely, as illustrated in FIG. 22, the amount of the heat transferred from the light EL to a certain area part on the polishing target surface PS becomes smaller as the moving speed of the irradiation area EA that is set on the certain area part becomes faster. Thus, the amount of the heat transferred from the light EL is controllable by the control apparatus 7 controlling the relative moving speed of the irradiation area EA. Namely, the control apparatus 7 may control the amount of the heat transferred from the light EL by controlling the relative moving speed of the irradiation area EA on the basis of the position of the irradiation area EA on the polishing target surface PS (namely, the diffusion degree of the heat at the area part of the polishing target surface PS on which the irradiation area EA is set). In this case, the control apparatus 7 may control the relative moving speed of the irradiation area EA so that the relative moving speed of the irradiation area EA becomes faster as the heat is difficult to be diffused more. Namely, the control apparatus 7 may control the relative moving speed of the irradiation area EA so that the relative moving speed of the irradiation area EA that is set on a certain area part on the polishing target surface PS becomes faster as the heat transferred to the certain area part is difficult to be diffused more.

The control apparatus 7 may control at least one of the head driving system 42 and the stage driving system 44 in order to control the moving speed of the irradiation area EA. Namely, the control apparatus 7 may control the relative moving speed of the irradiation area EA relative to the polishing target surface PS by controlling at least one of the moving speed (especially, the moving speed in a direction along the XY plane) of the build head 41 and the moving speed (especially, the moving speed in a direction along the XY plane) of the stage 44. Alternatively, when the irradiation system 411 has an optical member (for example, a Galvano scanner and the like) that is allowed to deflect the light EL, the control apparatus 7 may control the relative moving speed of the irradiation area EA relative to the polishing target surface PS by controlling the optical member that is allowed to deflect the light EL.

Note that the control apparatus 7 may control the amount of the heat transferred from the light EL so that the amount of the heat transferred from the light EL is constant regardless of the position of the irradiation area EA on the three-dimensional structural object ST (namely, the diffusion degree of the heat at the area part of the polishing target surface PS on which the irradiation area EA is set). Especially, when the diffusion degree of the heat at the three-dimensional structural object ST is even, the control apparatus 7 may control the amount of the heat transferred from the light EL so that the amount of the heat transferred from the light EL is constant regardless of the position of the irradiation area EA on the three-dimensional structural object ST. Namely, the control apparatus 7 may control the amount of the heat transferred from the light EL so that the amount of the heat transferred from the light EL to a first area of a certain polishing target surface PS is same as the amount of the heat transferred from the light EL to a second area of the same polishing target surface PS and the amount of the heat transferred from the light EL is same as the amount of the heat transferred from the light EL to another polishing target surface PS. In this case, for example, the control apparatus 7 may control the intensity of the light EL so that the intensity of the light EL on the irradiation area EA is constant regardless of the position of the irradiation area EA on the polishing target surface PS. For example, the control apparatus 7 may control the relative moving speed of the irradiation area EA so that the relative moving speed of the irradiation area EA relative to the polishing target surface PS is constant regardless of the position of the irradiation area EA on the polishing target surface PS.

Note that the above described deformation reduction operation may be performed by using the three-dimensional model data of the three-dimensional structural object ST. For example, the area part at which the heat is not diffused easily may be determined by executing a heat simulation using the three-dimensional model data of the three-dimensional structural object ST, and then, the amount of the heat transferred from the light EL may be controlled so that the amount of the heat transferred from the light EL to the determined area part becomes small. Moreover, the diffusion degree of the heat for each partial shape of the three-dimensional structural object may be generated as a library. For example, the diffusion degree of the heat at parts of the three-dimensional structural object having different shapes is calculated by an experiment or a simulation and is stored as the library with being associated with the shape. Then, an information of the diffusion degree of the heat for each part is read from the library on the basis of the shape of the three-dimensional structural object ST that is the polishing target object and the amount of the heat transferred from the light EL may be controlled by using this information.

### (3-4) Other Modified Example

The build system 1 may not perform the polishing operation to satisfy the above described light intensity condition. In this case, the intensity of the light EL used by the polishing operation may be same as or larger than the intensity of the light EL used by the build operation.

The build system 1 may not perform the polishing operation to satisfy the above described irradiation size condition. In this case, the size R1 of the irradiation area EA that is set at a certain area part of the polishing target surface PS may be same as or larger than the pitch R2 of the concavity and convexity existing at this area part.

The build system 1 may not perform the polishing operation to satisfy the above described light direction condition. In this case, the angle θ between the normal line NV of the polishing target surface PS on which the irradiation area EA is set and the axis line of the light EL that propagates to the irradiation area EA may change depending on the position of the irradiation area EA. The direction of the normal line NV of the polishing target surface PS on which the irradiation area EA is set and the direction of the axis line of the light EL that propagates to the irradiation area EA maybe different from (in other words, may not be coincident with) each other. The direction (namely, the direction of the axis line) of the light EL that propagates from the irradiation system 411 to the irradiation area EA may not be adjusted so that the angle θ between the normal line NV of the polishing target surface PS on which the irradiation area EA is set and the axis line of the light EL that propagates to the irradiation area EA decreases.

The build system 1 may not perform the polishing operation to satisfy the above described surface direction condition. In this case, the direction of the normal line NV of the polishing target surface PS on which the irradiation area EA is set may change depending on the position of the irradiation area EA. The polishing target surface PS on which the irradiation area EA is set may face toward different direction based on the position of the irradiation area EA. The direction of the normal line NV of the polishing target surface PS on which the irradiation area EA is set may not be coincident with the gravity direction (namely, the Z axis direction). The polishing target surface PS on which the irradiation area EA is set may not be the horizontal surface. The polishing target surface PS on which the irradiation area EA is set may not face upwardly and vertically (namely, toward the +Z side). For example, the polishing target surface PS on which the irradiation area EA is set may face downwardly and vertically (namely, toward the -Z side). When the polishing target surface PS faces downwardly and vertically, there is a possibility that the surface of the build material M molten by the irradiation of the light EL becomes the flat surface depending on a relationship between the weight and the surface tension of the build material M molten by the irradiation of the light EL.

Note that the polishing operation is performed as the processing operation of the three-dimensional structural object ST, however, the polishing operation may not be performed. Moreover, although the polishing operation is performed as the processing operation of the three-dimensional structural object ST, the processing other than the polishing operation, for example, a removal processing by the light EL or the light ELa may be performed.

In the above described description, the head driving system 42 moves the build head 41 along each of the X axis, the Y axis and the Z axis. However, the head driving system 42 may not move the build head 41 along at least one of the X axis, the Y axis and the Z axis. The head driving system 42 may move the build head 41 along at least one of the θX axis, the θY axis and the θZ axis, in addition to or instead of at least one of the X axis, the Y axis and the Z axis.

In the above described description, the stage driving system 44 moves the stage 43 along each of the θY axis and the θZ axis. However, the stage driving system 44 may not move the stage 43 along at least one of the θY axis and the θZ axis. The stage driving system 44 may move the stage 43 along at least one of the θX axis, the X axis, the Y axis and the Z axis, in addition to or instead of at least one of the θY axis and the θZ axis.

In the above described description, the build apparatus 4 melts the build materials M by irradiating the build materials M with the light EL. However, the build apparatus 4 may melt the build materials M by irradiating the build materials M with any energy beam. In this case, the build apparatus 4 may be provided with a beam irradiation apparatus that is configured to emit any energy beam in addition to or instead of the irradiation system 411. Any energy beam includes a charged particle beam such as an electron beam and an ion beam or an electromagnetic wave, although it is not limited. Moreover, the build apparatus 4 may melt the build materials M by transferring the heat to the build materials M. In this case, the build apparatus 4 may melt the build materials M by supplying a high temperature gas (as one example, blaze) to the build materials M in addition to or instead of the irradiation system 411.

In the above described description, the build system 1 is configured to form the build object by the Laser Metal Deposition. However, the build system 1 may form the three-dimensional structural object ST from the build materials M by another method that is configured to form the three-dimensional structural object ST by repeating the operation of forming the structural layer SL from the build materials M to laminate the plurality of structural layers SL. A Powder Bed Fusion such as a Selective Laser Sintering (SLS), a Binder Jetting or a Laser Metal Fusion (LMF) is one example of another method, for example.

At least a part of the features of each embodiment described above may be appropriately combined with at least another part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing apparatus, a processing method, a build apparatus, a build method, a computer program and a recording medium, which involve such changes, are also intended to be within the technical scope of the present invention.

### Description of Reference Codes

- 1: build system
- 3: material supply apparatus
- 4: build apparatus
- 41: build head
- 411: irradiation system
- 412: material nozzle
- 42: head driving system
- 43: stage
- 44: stage driving system
- 5: light source
- W: workpiece
- M: build material
- SL: structural layer
- ST: three-dimensional structural object
- CS: build surface
- PS: polishing target surface
- EA: irradiation area
- MA: supply area
- MP: melt pool

## Claims

1. A processing apparatus that performs a process for irradiating an object with an energy beam,
the processing apparatus comprising:
an energy beam irradiation apparatus that irradiates at least a part of a surface of the object with the energy beam; and
a position change apparatus that changes an irradiation position of the energy beam on the surface of the object,
the processing apparatus controlling the irradiation position of the energy beam by using a shape information relating to a shape of the object.

2. The processing apparatus according to claim 1 further comprising a shape measurement apparatus that measures the shape of the object,
the shape information including a measured result of the measurement apparatus.

3. The processing apparatus according to claim 1 or 2, wherein
the shape information includes a design information of the object.

4. The processing apparatus according to any one of claims 1 to 3 changing a direction of the energy beam propagating to the irradiation position on the basis of the irradiation position on the surface of the object.

5. The processing apparatus according to any one of claims 1 to 4, wherein
an angle between a normal line of the surface at the irradiation position and an axis line of the energy beam propagating to the irradiation position does not change regardless of the irradiation position on the surface of the object.

6. The processing apparatus according to any one of claims 1 to 5 further comprising an attitude change apparatus that changes an attitude of the object relative to an axis line of the energy beam propagating to the irradiation position.

7. The processing apparatus according to any one of claims 1 to 6, wherein
a direction of a normal line of the surface at the irradiation position does not change regardless of the irradiation position on the surface of the object.

8. The processing apparatus according to claim 7, wherein
the direction of the normal line is a gravity direction.

9. The processing apparatus according to any one of claims 1 to 8 changing an intensity or an energy per unit area of the energy beam propagating to the irradiation position on the basis of the irradiation position on the surface of the object.

10. The processing apparatus according to any one of claims 1 to 8, wherein
the intensity or the energy per unit area of the energy beam propagating to the irradiation position does not change regardless of the irradiation position on the surface of the object.

11. The processing apparatus according to any one of claims 1 to 11, wherein
the object is a solid object.

12. A processing apparatus that performs a process for irradiating an object with an energy beam,
the processing apparatus comprising:
an energy beam irradiation apparatus that irradiates a first part of a surface of the object and a second part of the surface of the object that faces to a direction different from a direction to which the first part faces with the energy beam; and
an attitude change apparatus that changes an attitude of the object relative to an irradiation direction of the energy beam,
the processing apparatus setting the attitude of the object to a first attitude so that the first part faces to a first direction and irradiating the first part with the energy beam and then setting the attitude of the object to a second attitude that is different from the first attitude so that the second part faces to a second direction and irradiating the second part with the energy beam.

13. The processing apparatus according to claim 12 further comprising a position change apparatus that changes an irradiation position of the energy beam on the surface of the object.

14. The processing apparatus according to claim 12 or 13, wherein
the first direction is a same direction as the second direction.

15. The processing apparatus according to any one of claims 12 to 14, wherein
the first and second directions are parallel with a gravity direction.

16. The processing apparatus according to any one of claims 12 to 15 setting the first and second attitudes by using a shape information relating to a shape of the object.

17. The processing apparatus according to claim 16 further comprising a shape measurement apparatus that measures the shape of the object,
the shape information including a measured result of the measurement apparatus.

18. The processing apparatus according to claim 16, wherein
the shape information includes a design information of the object.

19. The processing apparatus according to claim 18, wherein
the design information includes an information that represents the shape of the object.

20. The processing apparatus according to any one of claims 12 to 19, wherein
an intensity or an energy per unit area of the energy beam with which the first part is irradiated is same as an intensity or an energy per unit area of the energy beam with which the second part is irradiated.

21. The processing apparatus according to any one of claims 12 to 19, wherein
an intensity or an energy per unit area of the energy beam with which the first part is irradiated and an intensity or an energy per unit area of the energy beam with which the second part is irradiated are different from each other.

22. The processing apparatus according to any one of claims 12 to 21, wherein
the object is a solid object,
the first part is a part of the solid object and the second part is another part of the solid object

23. A processing apparatus that processes a build object that is built by irradiating a first surface of a member with a build energy beam to form a melt pool at the first surface and supplying build materials to the melt pool,
the processing apparatus irradiating at least a part of a second surface of the build object that faces to a second direction that intersects with a first direction along which the member and the build object are arranged with a processing energy beam.

24. The processing apparatus according to claim 23 irradiating a border part between the member and the build object with the processing energy beam.

25. The processing apparatus according to claim 23 or 24, wherein
the member is built by supplying the build materials to the melt pool that is formed by irradiating a third surface of a base member with the build energy beam.

26. The processing apparatus according to any one of claims 23 to 25, wherein
the first direction is a direction from a bottom surface to an upper surface of the melt pool.

27. The processing apparatus according to any one of claims 23 to 26, wherein
an intensity or an energy per unit area of the processing energy beam is smaller than an intensity or an energy per unit area of the build energy beam.

28. The processing apparatus according to any one of claims 23 to 27, wherein
a size of a first area of the second surface that is irradiated with the processing energy beam is larger than a size of a second area of the first surface that is irradiated with the build energy beam.

29. The processing apparatus according to any one of claims 23 to 28 further comprising a light source that emits the build energy beam and the processing energy beam.

30. The processing apparatus according to claim 29 further comprising a condensing optical system that collects the energy beam from the light source,
a first collection state of the energy beam from the condensing optical system that is condensed at the first surface and a second collection state of the energy beam from the condensing optical system that is condensed at the second surface are different from each other.

31. The processing apparatus according to claim 30, wherein
the energy beam in the first collection state is the build energy beam and the energy beam in the second collection state is the processing energy beam.

32. The processing apparatus according to any one of claims 23 to 31 further comprising an attitude change apparatus that changes an attitude of the build object relative to a direction along which the build energy beam is emitted.

33. The processing apparatus according to claim 32 changing the attitude so that a direction along which the build energy beam is emitted toward the first surface when the build object is built and a direction along which the processing energy beam is emitted toward the second surface are different from each other.

34. The processing apparatus according to claim 32 or 33 changing the attitude by using a shape information relating to a shape of the build object.

35. The processing apparatus according to any one of claims 32 to 34 changing the direction along which the build energy beam is emitted by using a shape information relating to a shape of the build object.

36. The processing apparatus according to claim 34 or 35 further comprising a shape measurement apparatus that measures the shape of the object,
the shape information including a measured result of the measurement apparatus.

37. The processing apparatus according to any one of claims 34 to 36, wherein
the shape information includes a design information of the object.

38. The processing apparatus according to claim 37, wherein
the design information includes an information that represents the shape of the object.

39. The processing apparatus according to claim 37 or 38 building the build object by using the design information.

40. The processing apparatus according to any one of claims 32 to 39, wherein
the attitude change apparatus changes the attitude so that the processing energy beam vertically enters the second surface.

41. The processing apparatus according to any one of claims 32 to 40, wherein
the attitude change apparatus changes the attitude so that an incident angle of the processing energy beam relative to the second surface is smaller than that before the attitude is changed.

42. The processing apparatus according to any one of claims 32 to 41, wherein
the second surface is horizontal when the second surface is irradiated with the processing energy beam.

43. The processing apparatus according to any one of claims 32 to 42, wherein
the member is built by supplying the build materials to the melt pool that is formed by irradiating a third surface of a base member with the build energy beam,
an irradiation area in a surface including the second surface of the build object and fourth surface of the surface of the member that faces to the second direction is irradiated with the processing energy beam,
a size of the irradiation area along the first direction is larger than an interval between a center position of the member and a center position of the build object along the first direction.

44. The processing apparatus according to claim 43, wherein
the size of the irradiation area along the first direction is larger than a half of a sum of a size of the build object along the first direction and a size of the member along the first direction.

45. The processing apparatus according to claim 43 polishing another part of the formed member by the processing energy beam during at least a part of a period when a part of the member is formed.

46. The processing apparatus according to any one of claims 23 to 45, wherein
a size of an irradiation area of the processing energy beam with which the second surface is irradiated is larger than a pitch of concavity and convexity at the second surface.

47. The processing apparatus according to any one of claims 23 to 46 further comprising a control apparatus that controls a processing condition of the second surface by the processing energy beam.

48. The processing apparatus according to claim 47, wherein
the control apparatus controls the processing condition so that a first processing condition that is used when a third part of the second surface is irradiated with the processing energy beam is different from a second processing condition that is used when a fourth part of the second surface is irradiated with the processing energy beam.

49. The processing apparatus according to claim 48, wherein
a transferring aspect of heat from the processing energy beam at the third part is different from a transferring aspect of heat from the processing energy beam at the fourth part.

50. The processing apparatus according to claim 49, wherein
the transferring aspect includes a diffusion characteristic of the heat from the processing energy beam.

51. The processing apparatus according to any one of claims 48 to 50, wherein
the third part includes an area at which the heat is not diffused more easily than the fourth part,
the control apparatus controls the processing condition so that a heat amount transferred from the processing energy beam to the third part is smaller than a heat amount transferred from the processing energy beam to the fourth part.

52. The processing apparatus according to any one of claims 48 to 51, wherein
the processing condition includes a first condition relating to the processing energy beam.

53. The processing apparatus according to claim 52, wherein
the first condition includes a condition relating to at least one of an intensity or an energy per unit area of the processing energy beam, a light concentration position of the processing energy beam, a defocused amount of the processing energy beam, a size of an irradiation area that is irradiated with the processing energy beam, a shape of the irradiation area, a position of the irradiation area and an intensity distribution or an energy distribution of the processing energy beam.

54. The processing apparatus according to any one of claims 48 to 51 further comprising a position change apparatus that changes a relative position between the processing energy beam and the second surface,
the processing condition including a second condition relating to the position change apparatus.

55. The processing apparatus according to claim 54, wherein,
the second condition includes a relative moving speed of an irradiation are that is irradiated with the processing energy beam relative to the second surface.

56. The processing apparatus according to any one of claims 46 to 55, wherein
the processing condition is a polishing condition.

57. The processing apparatus according to any one of claims 23 to 56 smoothing the second surface by an irradiation of the energy beam to the second surface compared to that before the irradiation of the energy beam.

58. The processing apparatus according to any one of claims 23 to 57 changing a color of the second surface by an irradiation of the energy beam to the second surface compared to that before the irradiation of the energy beam.

59. The processing apparatus according to any one of claims 23 to 58 increasing a reflectance of the second surface by an irradiation of the energy beam to the second surface compared to that before the irradiation of the energy beam.

60. The processing apparatus according to any one of claims 23 to 59 decreasing a roughness of the second surface by an irradiation of the energy beam to the second surface compared to that before the irradiation of the energy beam.

61. The processing apparatus according to any one of claims 23 to 60 decreasing a diffusion degree of a light at the second surface by an irradiation of the energy beam to the second surface compared to that before the irradiation of the energy beam.

62. The processing apparatus according to any one of claims 22 to 61 melting the second surface by an irradiation of the energy beam to the second surface.

63. The processing apparatus according to claim 62, wherein
an action of a surface tension at a surface of a molten object molten at the second surface of the object improves a smoothness of the surface.

64. A processing apparatus comprising:
a light source that supplies an energy beam;
a condensing optical system that collects the energy beam from the light source at a target object;
a material supply part that supplies build materials to a condensed position of the energy beam through the condensing optical system;
a position change apparatus that changes a relative positional relationship between the condensed position and the target object; and
a control apparatus that controls the position change apparatus to form an object as a build object by changing the relative positional relationship between the condensed position and the target object and suppling the build materials to the condensed position,
the object being irradiated with the energy beam through the condensing optical system,
an optical path in the condensing optical system of the energy beam from the light source that is condensed at the target object being a same optical path as an optical path in the condensing optical system of the energy beam with which the object is irradiated.

65. The processing apparatus according to any one of claims 1 to 22 and 64 smoothing a surface of the object by an irradiation of the energy beam to the object compared to that before the irradiation of the energy beam.

66. The processing apparatus according to any one of claims 1 to 22, 64 and 65 changing a color of a surface of the object by an irradiation of the energy beam to the object compared to that before the irradiation of the energy beam.

67. The processing apparatus according to any one of claims 1 to 22 and 64 to 66 increasing a reflectance of a surface of the object by an irradiation of the energy beam to the object compared to that before the irradiation of the energy beam.

68. The processing apparatus according to any one of claims 1 to 22 and 64 to 67 decreasing a roughness of a surface of the object by an irradiation of the energy beam to the object compared to that before the irradiation of the energy beam.

69. The processing apparatus according to any one of claims 1 to 22 and 64 to 68 decreasing a diffusion degree of a light at a surface of the object by an irradiation of the energy beam to the object compared to that before the irradiation of the energy beam.

70. The processing apparatus according to any one of claims 1 to 22 and 64 to 69 melting a surface of the object by an irradiation of the energy beam to the object.

71. The processing apparatus according to claim 70, wherein
an action of a surface tension at a surface of a molten object molten at a surface of the object improves a smoothness of the surface.

72. A processing method of performing a process for irradiating an object with an energy beam,
the processing method including:
irradiating at least a part of a surface of the object with the energy beam; and
changing an irradiation position of the energy beam on the surface of the object,
the processing method changing the irradiation position of the energy beam by using a shape information relating to a shape of the object.

73. A processing method of performing a process for irradiating an object with an energy beam,
the processing method including:
setting an attitude of an object to a first attitude so that a first part of a surface of the object faces to a first direction and irradiating the first part with an energy beam; and
setting the attitude of the object to a second attitude that is different from the first attitude so that a second part of the surface of the object that faces to a direction different from a direction to which the first part faces faces to a second direction and irradiating the second part with the energy beam.

74. A processing method of processing a build object that is built by irradiating a first surface of a member with a build energy beam to form a melt pool at the first surface and supplying build materials to the melt pool,
the processing method including:
irradiating at least a part of a second surface of the build object that faces to a second direction that intersects with a first direction along which the member and the build object are arranged with a processing energy beam.

75. A processing method including:
building a build object by irradiating a first surface of a member with a build energy beam to form a melt pool at the first surface and supplying build materials to the melt pool; and
irradiating at least a part of a second surface of the build object that faces to a second direction that intersects with a first direction along which the member and the build object are arranged with a processing energy beam.

76. A processing method including:
supplying an energy beam;
collecting the energy beam from the light source at a target object by using a condensing optical system;
supplying build materials to a condensed position of the energy beam through the condensing optical system;
forming an object as a build object by changing the relative positional relationship between the condensed position and the target object and suppling the build materials to the condensed position; and
irradiating the object with the energy beam through the condensing optical system,
an optical path in the condensing optical system of the energy beam from the light source that is condensed at the target object being a same optical path as an optical path in the condensing optical system of the energy beam with which the object is irradiated.

77. A processing apparatus that processes the surface of the object by using the processing apparatus according to any one of claims 1 to 22 and 64 to 71.

78. A processing apparatus that processes the second surface by using the processing apparatus according to any one of claims 23 to 63.

79. A build apparatus that forms a target build object,
the build apparatus polishing a surface of the target build object by using the processing apparatus according to any one of claims 1 to 71.

80. A build apparatus that forms a target build object,
the build apparatus polishing a surface of the target build object by using the processing method according to any one of claims 72 to 76.

81. The build apparatus according to claim 79 or 80, wherein
the build apparatus comprises: an energy beam irradiation apparatus that irradiate a build surface with a build energy beam; and a supply system that supplies build materials to the build surface, and forms the target build object by forming a melt pool at the build surface by the build energy beam with which the build surface is irradiated and melting the build materials in the melt pool.

82. A build method including:
forming a target build object; and
polishing a surface of the target build object by using the processing apparatus according to any one of claims 1 to 71.

83. A build method including:
forming a target build object; and
polishing a surface of the target build object by using the processing method according to any one of claims 72 to 76.

84. A computer program that allows a computer to execute the processing method according to any one of claims 72 to 76.

85. A computer program that allows a computer to execute the processing method according to claim 77 or 78.

86. A computer program that allows a computer to execute the build method according to claim 82 or 83.

87. A recording medium in which the computer program according to any one of claims 84 to 86 is recorded.

88. A computer program that is executed by a computer for controlling a processing apparatus that performs a process for irradiating an object with an energy beam,
the processing apparatus comprising: an energy beam irradiation apparatus that irradiates at least a part of a surface of the object with the energy beam; and a position change apparatus that changes an irradiation position of the energy beam at the surface of the object,
the computer program allowing the computer to execute a process for controlling the irradiation position of the energy beam by using a shape information relating to a shape of the object.

89. A computer program that is executed by a computer for controlling a processing apparatus that performs a process for irradiating an object with an energy beam,
the processing apparatus comprising: an energy beam irradiation apparatus that irradiates a first part of a surface of the object and a second part of the surface of the object that faces to a direction different from a direction to which the first part faces with the energy beam; and an attitude change apparatus that changes an attitude of the object relative to a irradiation direction of the energy beam,
the computer program allowing the computer to execute a process for setting the attitude of the object to a first attitude so that the first part faces to a first direction and irradiating the first part with the energy beam and then setting the attitude of the object to a second attitude that is different from the first attitude so that the second part faces to a second direction and irradiating the second part with the energy beam.

90. A computer program that is executed by a computer for controlling a processing apparatus that processes a build object that is built by irradiating a first surface of a member with a build energy beam to form a melt pool at the first surface and supplying build materials to the melt pool,
the computer program allowing the computer to execute a process for irradiating at least a part of a second surface of the build object that faces to a second direction that intersects with a first direction along which the member and the build object are arranged with a processing energy beam.

91. A computer program that is executed by a computer for controlling a processing apparatus that comprises: a light source that supplies an energy beam; a condensing optical system that collects the energy beam from the light source at a target object; a material supply part that supplies build materials to a condensed position of the energy beam through the condensing optical system; and a position change apparatus that changes a relative positional relationship between the condensed position and the target object,
the processing apparatus irradiating the object with the energy beam through the condensing optical system,
an optical path in the condensing optical system of the energy beam from the light source that is condensed at the target object being a same optical path as an optical path in the condensing optical system of the energy beam with which the object is irradiated,
the computer program allowing the computer to execute a process for controlling the position change apparatus form an object as a build object by changing the relative positional relationship between the condensed position and the target object and suppling the build materials to the condensed position.

92. A processing apparatus that performs a process for irradiating an object with an energy beam,
the processing apparatus comprising:
an energy beam irradiation apparatus that irradiates at least a part of a surface of the object with the energy beam;
a position change apparatus that changes an irradiation position of the energy beam on the surface of the object; and
a receiving apparatus that receives a control signal for controlling the irradiation position of the energy beam by using a shape information relating to a shape of the object.

93. A processing apparatus that performs a process for irradiating an object with an energy beam,
the processing apparatus comprising:
an energy beam irradiation apparatus that irradiates a first part of a surface of the object and a second part of the surface of the object that faces to a direction different from a direction to which the first part faces with the energy beam;
an attitude change apparatus that changes an attitude of the object relative to an irradiation direction of the energy beam; and
a receiving apparatus that receives a control signal for controlling the energy beam irradiation apparatus and the attitude change apparatus to set the attitude of the object to a first attitude so that the first part faces to a first direction and irradiate the first part with the energy beam and then set the attitude of the object to a second attitude that is different from the first attitude so that the second part faces to a second direction and irradiate the second part with the energy beam.

94. A processing apparatus that processes a build object that is built by irradiating a first surface of a member with a build energy beam to form a melt pool at the first surface and supplying build materials to the melt pool,
the processing apparatus comprising a receiving apparatus that receives a control signal for controlling the processing apparatus to irradiate at least a part of a second surface of the build object that faces to a second direction that intersects with a first direction along which the member and the build object are arranged with a processing energy beam.

95. A processing apparatus comprising:
a light source that supplies an energy beam;
a condensing optical system that collects the energy beam from the light source at a target object;
a material supply part that supplies build materials to a condensed position of the energy beam through the condensing optical system;
a position change apparatus that changes a relative positional relationship between the condensed position and the target object; and
a receiving apparatus that receives a control signal for controlling the position change apparatus to form an object as a build object by changing the relative positional relationship between the condensed position and the target object and suppling the build materials to the condensed position,
the object being irradiated with the energy beam through the condensing optical system,
an optical path in the condensing optical system of the energy beam from the light source that is condensed at the target object being a same optical path as an optical path in the condensing optical system of the energy beam with which the object is irradiated.

96. A control apparatus that controls a processing apparatus that performs a process for irradiating an object with an energy beam,
the processing apparatus comprising: an energy beam irradiation apparatus that irradiates at least a part of a surface of the object with the energy beam; and a position change apparatus that changes an irradiation position of the energy beam on the surface of the object,
the control apparatus executing a process for controlling the irradiation position of the energy beam by using a shape information relating to a shape of the object.

97. A control apparatus that controls a processing apparatus that performs a process for irradiating an object with an energy beam,
the processing apparatus comprising: an energy beam irradiation apparatus that irradiates a first part of a surface of the object and a second part of the surface of the object that faces to a direction different from a direction to which the first part faces with the energy beam; and an attitude change apparatus that changes an attitude of the object relative to an irradiation direction of the energy beam,
the control apparatus executing a process for setting the attitude of the object to a first attitude so that the first part faces to a first direction and irradiating the first part with the energy beam and then setting the attitude of the object to a second attitude that is different from the first attitude so that the second part faces to a second direction and irradiating the second part with the energy beam.

98. A control apparatus that controls a processing apparatus that processes a build object that is built by irradiating a first surface of a member with a build energy beam to form a melt pool at the first surface and supplying build materials to the melt pool,
the control apparatus executing a process for irradiating at least a part of a second surface of the build object that faces to a second direction that intersects with a first direction along which the member and the build object are arranged with a processing energy beam.

99. A control apparatus that controls a processing apparatus,
the processing apparatus comprising: a light source that supplies an energy beam; a condensing optical system that collects the energy beam from the light source at a target object; a material supply part that supplies build materials to a condensed position of the energy beam through the condensing optical system; and a position change apparatus that changes a relative positional relationship between the condensed position and the target object,
the processing apparatus irradiating the object with the energy beam through the condensing optical system,
an optical path in the condensing optical system of the energy beam from the light source that is condensed at the target object being a same optical path as an optical path in the condensing optical system of the energy beam with which the object is irradiated,
the control apparatus executing a process for controlling the position change apparatus to form an object as a build object by changing the relative positional relationship between the condensed position and the target object and suppling the build materials to the condensed position.
